# EUROPÄISCHE PATENTANMELDUNG

(11) **EP 4 752 510 A1**
(43) Veröffentlichungstag der Anmeldung: **03.06.2026**
(21) Anmeldenummer: 25208260.7
(22) Anmeldetag: 13.10.2025
(51) Int. Cl.: G01J 5/02, G01J 5/06, H05B 3/00

(54) **MESSVERFAHREN, REGELUNGSSYSTEM UND VERFAHREN ZUR AUSLEGUNG ODER REGELUNG VON INFRAROTHEIZUNGEN**

(30) Priorität: 14.10.2024 DE 102024129765
(71) Anmelder: Prestel, Thomas Oliver, 70569 Stuttgart (DE)
(72) Erfinder: Prestel, Thomas Oliver, 70569 Stuttgart (DE)
(74) Vertreter: Murgitroyd & Company

(57) **Zusammenfassung**

Es wird ein Messverfahren zur Erfassung von Strahlungseigenschaften einer Heizquelle bereitgestellt, wobei das genannte Messverfahren folgende Schritte umfasst: Anordnen einer Heizquelle mit einer vertikalen Ausrichtung entlang ihrer Hauptausdehnung oder in einer in Bezug auf die Vertikale angewinkelten Position; Bereitstellen eines bestrahlbaren Testobjektes mit einer Längsachse und/oder mindestens einer Mittelachse, wobei eine der Heizquelle zugewandten Testobjektoberfläche einen vorbestimmten Emissionsgrad aufweist und in einem vorbestimmten Abstand zur Heizquelle angeordnet wird; Befestigen von wenigstens einem Temperatursensor zum Erfassen wenigstens einer Oberflächentemperatur auf der der Heizquelle zugewandten Testobjektoberfläche und/oder wenigstens einer Strahlungstemperatur; und/oder Bereitstellen eines zum Testobjekt beabstandeten Temperatursensors zur Messung einer Lufttemperatur und/oder wenigstens einer Strahlungstemperatur; Emittieren von Strahlung zum Erreichen eines vorbestimmten Regeltemperaturbereiches einer vorbestimmten Oberfläche der Heizquelle; Erfassen der Heizquellentemperaturverteilung der vorbestimmten Oberfläche mittels des beabstandeten Temperatursensors oder eines weiteren Temperatursensors; Analyse der erfassten Messdaten, um dem vorbestimmten Regeltemperaturbereich der Heizquelle und/oder die Lufttemperatur der Oberflächentemperatur der Testobjektoberfläche und der wenigstens einen Strahlungstemperatur zuzuordnen. Ferner wird ein System und Verfahren zur Regelung wenigstens einer Heizquelle bereitgestellt.

## Beschreibung

Die Erfindung betrifft Messverfahren zur Erfassung von Strahlungseigenschaften wenigstens einer Heizquelle, ein System zur Regelung wenigstens einer Heizquelle, die Strahlung im Infrarotbereich emittiert, und ein Verfahren zur Auslegung und/oder Regelung von einer oder mehreren Infrarotheizquellen zur optimalen Regelung einer Raumtemperatur.

### Technologischer Hintergrund

Infrarotheizquellen können durch unterschiedliche Energieträger wie fossile Brennstoffe, nachwachsende Rohstoffe in Form von Holz oder elektrischen Strom betrieben werden. Im Gegensatz zu Kachelöfen haben elektrisch betriebene Infrarotheizvorrichtungen den Vorteil, dass Sie bei einer vorhandenen Stromversorgung flexibel in Räumen eingesetzt werden können. Grundsätzlich zeichnen sich Infrarotheizquellen durch einen hohen Strahlungswirkungsgrad aus. Der Strahlungswirkungsgrad gibt an, wieviel von der zugeführten elektrischen Leistung effektiv als Infrarotstrahlungsleistung an der Oberfläche des Moduls ausgesendet wird. Dies bedeutet ein verhältnismäßig hoher Strahlungsanteil im Vergleich zur konvektiven Wärmeabgabe.

Nach der Norm DIN EN 60675-3 der International Electrotechnical Commision (IEC) für elektrische Direktheizgeräte muss eine Infrarotheizung einen Strahlungswirkungsgrad von mindestens 40 % betragen, damit die Heizquelle als Infrarotheizquelle bezeichnet werden kann. Ab diesem Mindestwert überwiegt die übertragene Wärmeleistung durch die Infrarotstrahlung im Vergleich zu anderen Wärmeabgabearten wie z.B. durch Konvektion, wobei insbesondere die Luft und nicht Gegenstände sowie Wände im Raum erwärmt werden.

Bei den gängigen Infrarotheizungen, die mit Strom betrieben werden, wird über einen Draht oder Heizfolien die Vorderseite des Moduls auf üblicherweise über 65°, bevorzugt 80-120 °C erhitzt (z.T. auch auf bis zu 200 °C), wodurch diese eine langwellige Infrarotstrahlung in den Raum abgibt. Dabei wird beim heutigen Stand der Technik von einem Strahlungskegel mit einem Öffnungswinkel von ca. 120 ° ausgegangen und einem maximalen Strahlungsanteil von 70 % bis annähernd 80 %. Die Betriebsart ist dabei nur in den Zuständen "Aus" mit 0 % Leistung und "Ein" mit 100 % Leistung geregelt. Eine Drosselung der Leistung wäre aus effizienztechnischen Gründen nicht zu empfehlen, da das Heizelement auf eine bestimmte Leistung ausgelegt ist und bei einer Reduktion zu wenig Energie an die Vorderseite abgeben würde. Die Oberflächentemperatur des Heizmoduls ist damit nicht linear abhängig zu der elektrischen Leistung und kann bei einer Drosselung der Leistung zu höheren Ineffizienzen bei der Umwandlung von elektrischer Leistung in Heizleistung führen.

Aus diesem Grund wird in nahezu allen Fällen eine Infrarotheizung manuell betrieben, über ein Steckdosenthermostat gesteuert oder über Funkthermostate entsprechend ein- und ausgeschaltet. Bei bekannten Thermostaten wird die Lufttemperatur im Raum als Parameter zur Steuerung der Infrarotheizung verwendet. Was bei einem Heizungstyp mit hohem Strahlungsanteil zu erheblichen Fehlern in der Regelung führen kann.

Es gibt bereits viele Hinweise, wie Infrarotheizungen im Raum anzubringen sind, wie z.B. nicht gegenüber von Fenstern, jedoch wird der Ort eines Thermostats bisher vernachlässigt. Bei der Verwendung von Steckdosenthermostaten ist das Thermostat zur Steuerung beispielsweise unter dem Modul und damit außerhalb des Strahlungskegels angeordnet.

Infrarotheizquellen, deren Leistung nicht stufenlos geregelt werden können, werden häufig über Thermostate ein- oder ausgeschaltet. Meist werden Oberflächen elektrisch aufgeheizt, welche dadurch Infrarotstrahlung (IR-Strahlung) aussenden und die bestrahlten Oberflächen erwärmen. Warme Objekte senden ebenfalls IR-Strahlung aus, weshalb auch Oberflächen erwärmt werden, welche nicht im direkten Strahlungsaustausch mit der Infrarotquelle stehen. Zudem entstehen Konvektionseffekte durch die vorbeiströmende Luft, welche sich an den Oberflächen erwärmt und ohne externe Strömungseinflüsse nach oben, Richtung Raumdecke strömt.

Die Thermostate sind üblicherweise direkt zwischen Steckdose und Heizungsmodul oder mit einer Funkverbindung an einer Raumwand angebracht. Gemessen wird bei nahezu allen marktüblichen Modellen die Raumlufttemperatur.

Dadurch, dass übliche Thermostate nur die Lufttemperatur messen, können die Strahlungseinflüsse der Infrarotheizquellen zum Teil nur ungenau bis gar nicht abgedeckt werden. Je nach Anbringungsort des Lufttemperatursensors kann dieser eine zu hohe oder zu niedrige Temperatur messen, welche an anderen Orten im Raum bereits überschritten oder noch nicht erreicht wurde. Ein Steckdosenthermostat, das neben oder unter der Infrarotquelle angebracht ist, befindet sich bei nahezu jeder Infrarotheizquelle außerhalb des Strahlungskegels. Dieser wird durch den Strahlungswinkel der Infrarotheizung bestimmt, welcher in den meisten Fällen bei maximal 120° liegt. Dadurch reagiert das Steckdosenthermostat erst, wenn sich die Raumluft bis zum Boden aufgeheizt hat, was charakteristisch für eine konvektive Heizung ist und für die Steuerung von Strahlungsheizungen zu erheblichen Nachteilen führen kann.

Auch Funkthermostate haben keinen genormten Anbringungsort. Es ist nicht festgelegt in welchem Abstand und Winkel zur Infrarotheizquelle, sowie der Höhe über dem Boden diese zu installieren sind. Oft werden diese von Heimwerkern an die Wand montiert, welchen das nötige Fachwissen fehlen kann. Aber selbst mit Fachwissen ist es aus den oben genannten Gründen nicht möglich, eine Infrarotheizquellen mit den beschriebenen Thermostaten optimal zu regeln und zu steuern.

Aus der DE 10 2016 123 536 A1 ist ein Heizsystem mit mehreren Infrarotheizgeräten zur Erzeugung von Wärme für zumindest eine sich in einem Raum eines Gebäudes aufhaltenden Person bekannt, welches eine Steuervorrichtung für zumindest ein Heizgerät des Heizsystems aufweist und personenbezogene Informationen von einem im Raum installierten Melder verwendet, um für die genannte Person gezielt Wärme zu erzeugen.

Es besteht die Aufgabe der vorliegenden Erfindung die Nachteile des Standes der Technik zu überwinden. Dabei ist es z.B. eine Aufgabe der vorliegenden Erfindung, das Problem einer nicht geeigneten Positionierung des Thermostats zu lösen. Ferner sollen sowohl die Raumeigenschaften als auch die Besonderheiten einer jeden Infrarotheizung berücksichtigt werden, wodurch eine durch Regelung gesteuerte Zielgröße optimalerweise konstant gehalten werden kann.

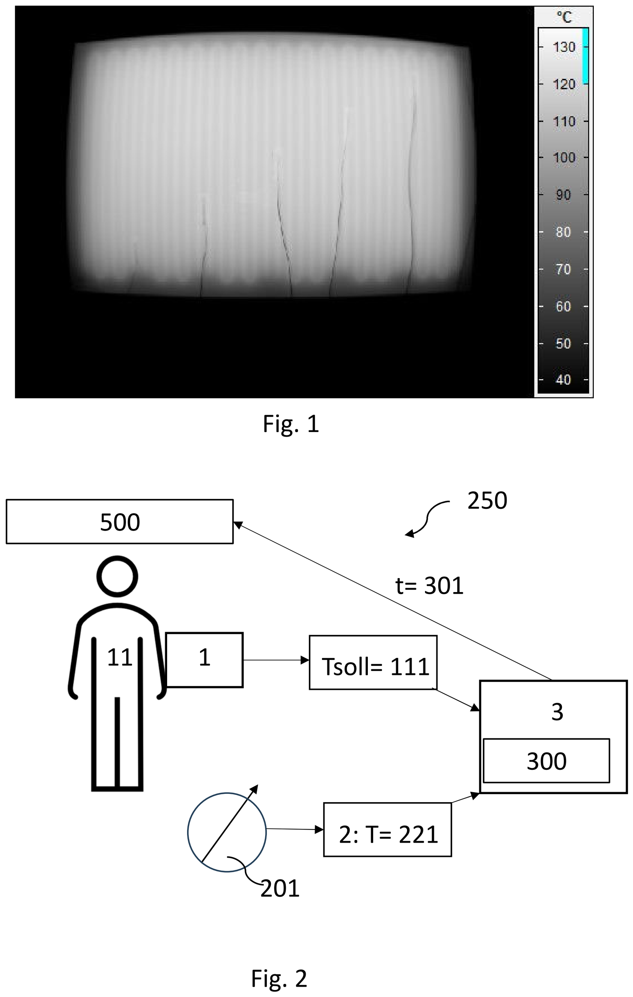

Im Stand der Technik besteht das Problem, dass die Herstellerangaben zu Eigenschaften von Infrarotheizungen zum Teil für präzise Regelungen zu ungenau sind. Es wurde z.B. durch die Vermessung von drei Infrarotheizungen des gleichen Herstellers unter Laborbedingungen deutlich erkannt, dass die Herstellerangaben von den Messwerten stark variieren können. Die Messergebnisse der Oberflächentemperatur ergaben, dass auf der Vorderseite der plattenförmig ausgebildeten Infrarotquelle an den Rändern, sowie entlang des Heizdrahts als auch dazwischen z.T. größere Inhomogenitäten der Oberflächentemperatur zu erkennen sind. Dies wird beispielhaft mit der in Figur 1 gezeigten gemessenen Temperaturverteilung in der Einheit Grad Celsius [°C] veranschaulicht. In **Fig. 1** ist der Verlauf des Heizdrahtes mit höheren Temperaturen und Temperaturabnahmen am Rande zu erkennen. Daher ist es notwendig wenigstens die tatsächliche Temperaturverteilung auf einer vorbestimmten Fläche der Oberfläche der Infrarotheizquelle genauer zu ermitteln.

Der Erfindung liegt ferner als Aufgabe zugrunde, ein System und Messverfahren vorzuschlagen, die genauere Messdaten als bekannt liefert. Auf diese Weise kann eine Raumauslegung und damit die Wahl des Heizquellentypes, die Anzahl des gewählten Types und die Orientierung der Heizquellen optimiert werden. Eine weitere Aufgabe ist es, basierend auf der vom Erfinder entwickelten genaueren Messmethode eine oder mehrere Infrarotquellen in Abhängigkeit von Zonen der Primärstrahlung genauer regeln zu können. In anderen Worten soll über die gemessenen Charakteristiken jedes einzelnen Heizmoduls genau die Strahlungsleistung bestimmt werden, welche notwendig ist, um Temperaturdifferenzen zwischen der vorherrschenden Raumlufttemperatur und der gewünschten Solltemperatur auszugleichen. So soll eine wählbare Temperatur, d.h. Solltemperatur für einen Raum oder eine Raumzone für die Raumnutzer genau regelbar sein. Bei schwankender Lufttemperatur oder sich ändernder Solltemperatur ist es Aufgabe der Erfindung, die Strahlungsleistung einer Heizquelle bzw. die Strahlungsleistungen mehrerer Heizquellen intelligent und möglichst präzise anzupassen, um die jeweils vorgegeben Solltemperatur zu erreichen. Ferner ist es eine Aufgabe die Infrarotstrahlungsenergie optimal einzusetzen, so dass Energiekosten reduziert werden können.

Eine weitere Aufgabe ist es, erstmals zu ermöglichen, einen Raum so mit IR-Heizquellen auszulegen, dass die direkte Bestrahlung von Oberflächen für eine gezielte Raumheizung eingesetzt werden kann. Bisherige Auslegungen und Anwendungen führen zu einer kontinuierlichen Erwärmung der Raumluft, welche über Regelsysteme wie beispielsweise Thermostate rein nach der Raumlufttemperatur geregelt und gesteuert werden. Die Auswirkungen der Wärmestrahlung sind bisher nicht genauer untersucht und wird bei der Raumauslegung nicht weiter beachtet.

### Beschreibung der Erfindung

Mit der erfindungsgemäßen Regelung oder einem entsprechenden Regelungsmodell und dem damit verbundenen gezielten und regelbaren Einsatz von IR-Strahlung ist es erstmals möglich einen Raum so auszulegen, dass die Heizquellen flächendeckend die Oberfläche des Raumes bestrahlt. Dadurch wird die Raumlufttemperatur nur ein Regelparameter und die Solltemperatur wird annähernd konstant auf den Oberflächen eintreten. Damit wird eine neuartige Raumauslegung bzw. ein neuartiges Raumauslegungsmodell erst möglich, welches sich nicht nach der Erwärmung der Raumlufttemperatur richtet, sondern in Abhängigkeit der Raumlufttemperatur und über gezielte Ein- und Ausschaltdauern die exakte Dosis an Wärmestrahlung abgibt, um Oberflächen auf eine gewünschte Temperatur aufzuheizen.

### Messverfahren

Gemäß einem ersten Aspekt wird ein Messverfahren zur Erfassung von Strahlungseigenschaften einer Heizquelle bereitgestellt, wobei das genannte Messverfahren folgende Schritte umfasst:
Anordnen einer Heizquelle mit einer vertikalen Ausrichtung entlang ihrer Hauptausdehnung oder in einer in Bezug auf die Vertikale angewinkelten Position im Bereich bis maximal 180°; Bereitstellen eines bestrahlbaren Testobjektes mit einer Längsachse und/oder mindestens einer Mittelachse, wobei eine der Heizquelle zugewandte Testobjektoberfläche einen vorbestimmten Emissionsgrad aufweist und in einem vorbestimmten Abstand zur Heizquelle angeordnet wird;
Befestigen von wenigstens einem Temperatursensor zum Erfassen wenigstens einer Oberflächentemperatur auf der der Heizquelle zugewandten Testobjektoberfläche und/oder wenigstens einer Strahlungstemperatur; und/oder
Bereitstellen eines zum Testobjekt beabstandeten Temperatursensors zur Messung einer Lufttemperatur und/oder wenigstens einer Strahlungstemperatur, Emittieren von Strahlung im Infrarotbereich zum Erreichen eines vorbestimmten Regeltemperaturbereiches einer vorbestimmten Oberfläche der Heizquelle;
Erfassen der Heizquellentemperaturverteilung der vorbestimmten Oberfläche der Heizquelle mittels des beabstandeten Temperatursensors oder eines weiteren Temperatursensors; Analyse der erfassten Messdaten, um dem vorbestimmten Regeltemperaturbereich der Heizquelle und/oder die Lufttemperatur der Oberflächentemperatur der Testobjektoberfläche und/oder der wenigstens einen Strahlungstemperatur zuzuordnen. In anderen Worten wird z.B. der vorbestimmte Regeltemperaturbereich der vorbestimmten Oberfläche der Heizquelle zu der Oberflächentemperatur der Testoberfläche (T (Testobjekt)) geordnet, um so Wertepaare T (Heizquellenoberfläche): T (Testobjekt) bereitzustellen.

In einer bevorzugten Ausführungsform kann der vorbestimmte Regeltemperaturbereich ein Mittelwert (T (Mittelwert Heizquellenoberfläche)) der vorbestimmten Oberfläche der Heizquelle sein. Der Mittelwert des Regeltemperaturbereichs wird im Nachfolgenden auch als "Heizungstemperatur" beschrieben, welche die Heizquelle im arithmetischen Mittel oder alternativ als Medianwert auf der Oberfläche der Frontplatte annimmt, während die Heizquelle in einem Bereich geregelt wird. Der Begriff Heizungstemperatur ist ungebräuchlich und wird für eine bessere Unterscheidung vom Erfinder verwendet, um die Oberflächentemperatur der Heizung und nicht die Lufttemperatur des beheizten Raumes zu beschreiben.

Nach dem Grundgedanken des vom Erfinder entwickelten Messverfahrens kann eine genauere Vermessung der Module bzw. Heizquellen als im Stand der Technik erfolgen. Hierzu wird eine Mehrzahl von Temperatursensoren bereitgestellt und es erfolgt eine Messung von einer Vielzahl von Parametern. Für eine genauere Vermessung der Module bzw. Heizquellen wird eine spezielle und genauere Sensorik verwendet, die sich zumindest teilweise von Temperatursensoren, die im Stand der Technik zur Charakterisierung von Infrarotheizquellen üblicherweise verwendet werden, unterscheiden.

Mit Hilfe der Vielzahl von Temperatursensoren kann zum einem die Lufttemperatur in einem zu beheizenden Raum und zum anderen Strahlungstemperatur sowie die tatsächliche Temperaturverteilung auf einer vorbestimmten Oberfläche der Infrarotheizquelle präzise ermittelt werden. Ferner kann mit Hilfe des Testobjektes und dem daran befestigten Temperatursensor die Oberflächentemperatur auf der der Heizquelle zugewandten Testobjektoberfläche vorzugsweise in verschiedenen Abständen zur Heizquelle gemessen werden. Mit der kombinierten Messung der Lufttemperatur und Strahlungstemperatur ergibt sich die Oberflächentemperatur des Testobjektes. Da das Testobjekt speziell vom Erfinder für diese Messungen entwickelt wurde, wird es im Folgenden auch als sogenannter Prestel-Dummy bezeichnet, der die Oberflächentemperatur resultierend aus den Umgebungseinflüssen präzise und mit geringer Latenz mit dem daran befestigten Temperatursensor messen kann. Die gemessene Oberflächentemperatur des Testobjektes ist hauptsächlich abhängig von dem Abstand des Testobjektes zur Heizquelle sowie von der maximalen Strahlungsleistung der Heizquelle kombiniert mit der im Raum vorherrschenden Lufttemperatur. Die Variation der Strahlungsleistung wird nicht über eine Drosselung des Stroms ermöglicht, sondern über genau getaktete Ein- und Ausschaltdauern.

Das erfindungsgemäße Messverfahren untersucht vorteilhafterweise unterschiedliche Szenarien, um Rückschlüsse auf Temperaturzustände in verschiedenen Abständen, bei unterschiedlichen Lufttemperaturen, sowie Oberflächentemperarturen des Heizmoduls bzw. der Heizquelle als auch Bezugspunkten auf einer oder mehreren von der Heizquelle beabstandeten Bezugsebenen abweichend vom projizierten Zentrum ziehen zu können.

Das erfindungsgemäße Messverfahren kann vorteilhaft für ein genaues Regelungsmodell bzw. -verfahren genutzt werden, das in einem weiteren Abschnitt "System zur Regelung" genauer beschrieben wird. Für ein genaues Regelungsverfahren sind die erfassten Messdaten und Analyse der Messdaten notwendig, damit die Besonderheiten der vermessenen Infrarotheizquellen bestimmt werden können. Dieses Messverfahren kann man bei einer Mehrzahl von verschiedenen Typen von Infrarotheizquellen anwenden. Basierend auf den genauen Messdaten kann eine Raumauslegung und damit die Wahl des Heizquellentypes, die Anzahl und die Orientierung der Heizquellen optimiert werden. Zudem können unter anderen basierend auf dieser entwickelten Messmethode eine oder mehrere Infrarotquellen vorzugsweise in Abhängigkeit von Zonen der Primärstrahlung genauer geregelt werden. Erstmals wird über das Regelungsmodell eine neuartige Raumauslegung möglich, welche über die gezielte Zufuhr an Wärmestrahlung Oberflächen (Bezugsebenen) auf eine gewünschte Solltemperatur erwärmt und flächendeckend den Raum mit Wärmestrahlung versorgt. Mit dem Regelungsmodell wird das Heizsystem nicht wie bisherig nach einer Raumlufttemperatur ein- und ausgeschaltet, sondern die Temperatur der Heizungsoberfläche in Abhängigkeit der Raumlufttemperatur so angepasst, dass sich eine annähernd konstante Oberflächentemperatur auf einer Bezugsebene einstellt, was eine neuartige Raumauslegung erst möglich macht. Dadurch wird die Wärmestrahlung für den direkten Austausch mit zu beheizenden Oberflächen gezielt eingesetzt.

Gemäß einem weiteren Aspekt der Erfindung ist das Messverfahren dadurch gekennzeichnet, dass der wenigstens eine Temperatursensor, der ausgelegt ist, Temperaturen des Testobjektes zu messen, ausgewählt ist aus der Gruppe umfassend:
Messspitzen zur Temperaturmessung, Thermodraht, Präzisionswiderstandsfühler, PT 100 und/oder PT1000, ein optisches Pyrometer oder eine Wärmebildkamera, und/oder einer Kombination von diesen.

Gemäß einer bevorzugten Ausführungsform ist der vom Testobjekt beabstandete Temperatursensor und/oder weitere Temperatursensor, der ausgelegt ist, die Temperaturverteilung auf der Heizquelle zu erfassen, ein optisches Pyrometer oder eine Wärmebildkamera mit einer geeigneten Sammellinse. Mit Hilfe eines Pyrometers, das im direkten Strahlungsfeld der Heizquelle angeordnet wird, kann man eine gemittelte oder mediane Oberflächentemperatur einer vorbestimmten Oberfläche der Heizquelle bestimmen, welche Inhomogenitäten, die bei Heizquellen des Standes der Technik üblich sind, ausgleicht. Ein solcher Pyrometer kann unter anderen in einem System zur Regelung einer Heizquelle dienen.

Die genannten Temperatursensoren, wie z.B. die Pyrometer, unterscheiden sich zumindest teilweise von den Temperatursensoren, die im Stand der Technik zur Charakterisierung von Infrarotheizquellen üblicherweise verwendet werden.

In einem bevorzugten Aspekt des Messverfahrens ist vorgesehen, dass das Testobjekt eine vorbestimmte Wärmekapazität aufweist und der Emissionsgrad des Testobjektes beträgt wenigstens 70%, vorzugsweise 95 %. Ferner ist eine bevorzugte Ausführungsform des Testobjektes plattenförmig oder stabförmig und weist eine Dicke zwischen 10 mm und 200 mm, vorzugsweise zwischen 30mm und 100 mm auf. Ferner umfasst das Messverfahren eine parallele Ausrichtung einer Mittelachse und/oder Längsachse des Testobjektes zur Heizquellenoberfläche.

Zur optimalen Messung wird die Längsachse und/oder Mittelachse des Prestel-Dummys oder Testobjektes so ausgerichtet, dass die der Heizquelle zugewandten Testobjektoberfläche parallel zur Vorderseite der Heizquelle angeordnet ist. Auf diese Weise kann der größtmögliche Strahlungsfluss gemessen werden. Durch eine vorteilhafte parallele Ausrichtung zu einer Heizplatte ist es nicht notwendig einen Sichtfaktor zur Berechnung der eigentlichen Strahlungsleistung zu berücksichtigen.

In einer weiteren vorteilhaften Ausgestaltung des Messverfahrens ist vorgesehen, dass ein Testobjekt oder auch Prestel-Dummy bereitgestellt wird, welches aus einem Dämmmaterial besteht, das auf der der Heizquelle zugewandten Oberfläche eine Schicht aufweist, die den Emissionsgrad auf wenigstens 70 % steigert.

Die Testobjekte werden gemäß dem erfindungsgemäßen Messverfahren in vorbestimmten oder definierten Abständen von beispielsweise 0,5 m im direkten Strahlungsfeld der Infrarotheizquelle aufgestellt und bei konstanten Raumtemperaturen in einem möglichen Bereich von 12 bis 28 °C vermessen.

Die Testobjekte oder Prestel-Dummys wurden vom Erfinder speziell so angefertigt, dass sie die Lufttemperatur messen und trotzdem sensibel auf Strahlungseinflüsse reagieren können. Die größtenteils aus Dämmmaterial bestehenden Testobjekte können über übliche Dämmplatten in einer ausreichenden Dicke von 10-200 mm realisiert werden, wobei das Dämmmaterial beispielsweise aus Holzfasern, Steinwolle, Polystyrol oder anderen Hartschaum-Zusammensetzungen oder Kombinationen davon bestehen.

Gemäß einem vorteilhaften Aspekt des Messverfahrens erfolgt ein Befestigen von wenigstens einem Sensor am Testobjekt mittels einer Klebefolie mit einem Emissionsgrad von mindestens 70 %. In einer bevorzugten Ausführungsform des Testobjektes kann der Temperatursensor mit einem Kreppband mit einem Emissionsgrad von mindestens 90 %, vorzugsweise 95% befestigt werden.

Die Testobjekte oder Prestel-Dummys werden vorzugsweise auf der Vorderseite mit einer Folie, Farbe, Lack oder anderen Substanz überzogen, welche einen hohen Emissionsgrad ähnlich der menschlichen Haut aufweist von vorzugsweise ca. 95 %, aber mindestens einen Emissionsgrad von 70 % besitzt.

Auf die Rückseite eines jeden Testobjektes oder Prestel-Dummys wird eine stark reflektierende Folie, Farbe, Lack oder Substanz angebracht, welche Strahlung gut reflektieren kann und einen Emissionsgrad von maximal 30 % besitzt, idealerweise nahe 0 %.

Wie bereits oben beschrieben, wird auf der der Heizquelle zugewandten Seite ein Temperaturfühler mit ausreichender Messgenauigkeit befestigt oder geklebt, sodass Temperaturabweichungen gering sind und die Auflösung der Messdaten im zehntel oder hundertstel Bereich liegen. Dies gelingt mit den oben genannten Temperatursensoren wie beispielsweise Thermodrähten, PT100-Fühlern oder Präzisionswiderstandsfühlern. Befestigt bzw. angebracht werden diese mit einer dünnen Klebefolie. Wie in der Wissenschaft üblich wird vom Erfinder handelsübliches Kreppband zur Befestigung verwendet, da sich Kreppband aufgrund seines hohen Emissionsgrades besonders gut eignet.

Gemäß einem weiteren Aspekt des Messverfahrens werden mit dem beabstandeten Temperatursensor oder weiteren Temperatursensor Messungen in einer Bezugsebene, welche in einem vorgebbaren Abstand zur Heizquelle angeordnet ist, durchgeführt, um vorzugsweise ein Wärmebild aufzunehmen, wobei diese Messungen in verschiedenen Abständen der Heizquelle zur Bezugsebene wiederholt werden.

Auf diese Weise kann mit einer Wärmebildkamera oder optischen Pyrometer in verschiedenen Abständen ein Wärmebild von einer Bezugsebene aufgenommen und zusätzlich mit Messpunkten validiert werden, um den effektiven Strahlungswinkel und die Temperaturunterschiede im Abstand zum projizierten Mittelpunkt auf der Bezugsebene zu messen. Dies kann in einem Ausführungsbeispiel der Messungen dadurch erfolgen, dass die vorzugsweise plattenförmige Heizquelle parallel zu einer Raumwand oder dem Boden eines Raumes angeordnet wird und das Wärmebild der Wand bzw. Boden gemessen wird. Diese Messungen erfolgen in verschiedenen Abständen von beispielsweise 0,5 m (z.B. 0,5 m, 1 m, 1,5 m, 2 m, 2,5 m, 3 m, 3,5 m, 4 m) der Heizquellenfläche zu der gewählten Bezugsebene, indem man beispielsweise die Heizquelle in Bezug auf die Bezugsebene in dem gewünschten Abstand positioniert. Hier weisen unterschiedliche Oberflächenmaterialien wie Blech, Glas oder Porzellan und die Homogenität der Oberflächentemperatur individuelle Charakteristiken im Wärmebild auf. Diese Messung wird ebenfalls mit unterschiedlichen Winkeln der Heizquelle zur Bezugsebene wiederholt.

Gemäß einem weiteren Aspekt des Messverfahrens werden die Messungen bei verschiedenen Raumlufttemperaturen, die zwischen 12°C und 28°C betragen, durchgeführt.

Auf diese Weise kann die Temperatur beispielsweise von 12°C schrittweise in 0,5°C - Schritten oder 1° Grad-Schritten vorzugsweise auf folgende Temperaturen erhöht werden: 12°C, 13°C, 14°C 15°C, 16°C, 16,5°C, 17°C, 17,5°C, 18°C, 18,5°C, 19°C, 19,5°, 20°C, 20,5°C, 21°C, 21,5°C, 22°C, 22,5°C, 23°C, 23,5°C, 24°C, 24,5°C, 25°C, 25,5°C, 26°C, 26,5°C, 27°C, 27,5°C, 28°C. Werden die Messungen bei isothermen Zuständen der Lufttemperatur des zu vermessenden Raumes mehrfach wiederholt, können Fehlerwerte bzw. Abweichungen durch statistische Verfahren wie Mittelungen minimiert bzw. ausgeschlossen werden.

Gemäß einer bevorzugten Ausführungsform kann jeder gemessenen Lufttemperatur einem vorbestimmten Regeltemperaturbereich der Heizquelle zugeordnet werden, wobei dieser vorbestimmte Wert bevorzugt einem Mittel- oder Medianwert der vorbestimmten Oberfläche der Heizquelle entspricht. Zudem können dem vorbestimmten Regeltemperaturbereich der Heizquelle Schaltzeiten der Heizquelle zugeordnet werden, so dass Wertepaare T (°C Heizquellenoberfläche): t ([s] Schaltzeiten; An/Aus) einer Datenbank bereitgestellt werden können. Die Schaltzeiten werden im Folgenden erläutert.

Gemäß dem erfindungsgemäßen Verfahren werden die Testobjekte in definierten Abständen von beispielsweise 0,5 m (z.B. 0,5 m, 1 m, 1,5 m, 2 m, 2,5 m, 3 m, 3,5 m, 4 m) im direkten Strahlungsfeld der Infrarotheizung aufgestellt und bei den oben genannten konstanten Raumtemperaturen in einem Bereich von 12 bis 28 °C vermessen. Dabei werden unterschiedliche Oberflächentemperaturen der Heizquelle eingestellt. Hierzu wird eine Heizquellentemperaturverteilung einer vorbestimmten Oberfläche der Heizquelle mittels eines beabstandeten Temperatursensors z.B. über ein optisches Pyrometer mit geeigneter Sammellinse gemessen. Diese Messungen können die bereits beschriebenen Inhomogenitäten bei der Oberflächentemperatur der Heizquelle ausgleichen und können in einem System als Regler fungieren. Beispielsweise wird im Bereich zwischen ca. +/- 2 K oder bis zu +/-25 K, bevorzugt im Bereich von +/-5 K zu einer gewünschten Heizungstemperatur ein Steckdosenrelais "Ein" und "Aus" geschalten, welches den Betrieb der Infrarotheizquelle steuert. Nachfolgend kann die Dauer der Zustände (Ein- und Ausshaltdauern bzw. Schaltzeiten t [s]) auf die Oberflächentemperatur des Heizmoduls rückgeschlossen werden und damit die Strahlungsleistung bestimmt werden.

Zusätzlich erfolgt eine Analyse der ersten Einschaltdauer, die der Aufheizdauer entspricht, die die Zeit bestimmt, welche das Heizmodul benötigt, um sich von Raum- bzw. Lufttemperatur bis zur oberen Grenze der vorzugsweise gemittelten oder medianen Oberflächentemperatur der Heizquelle aufzuheizen. Dadurch ergibt sich eine genaue Zuordnung, wie lange die Heizquelle bzw. das jeweilige Modul bei einer Vielzahl von Heizquellen vorgeheizt werden muss. Zusammen mit einer Ermittlung wie lange die Heizquelle "Ein" und "Aus" geschaltet werden muss (d.h. t Schaltzeiten in [s]), um eine konstante Heizungstemperatur zu erreichen und welche jeweiligen Oberflächentemperaturen des Testobjektes sich in den verschiedenen Abständen einstellen wird (Wertepaare T (Mittel- oder Medianwert der Heizquellenoberfläche): T (Testobjekt bei D=1, D=2 usw.), kann die Strahlungsleistung der Heizquelle über genau getaktete Ein- und Ausschaltdauern geregelt werden.

Durch diese ermittelten festen Beziehungen ausgewählter Parameter zueinander können anhand einer Interpolation (linear oder polynominal) Werte zwischen den Messdaten erzeugt werden. Abstandsabhängig können nun den Oberflächentemperaturen des Testobjektes die passenden Einschalt-, Ausschalt- und Aufheizdauern zugeordnet werden. In einer Matrix können die Dummy-Oberflächentemperaturen, Lufttemperaturen und zugehörigen Einschalt- , Ausschalt- und Aufheizdauern aufgelistet werden und für die Regelung der jeweils vermessenen Heizquelle in einer Datenbank gespeichert werden.

Optional kann das Messverfahren folgende weitere Schritte umfassen:
Bereitstellen eines Multimeters zum Erfassen der Stromstärke, Spannung und/oder elektrische Leistung der Heizquelle; und
Bestimmen der Aufheiz-, Ein- und Ausschaltdauer der Heizquelle für den jeweiligen Regeltemperaturbereich, der ausgewählt ist aus einer Mehrzahl von Temperaturstufen, die vorzugsweise zwischen 50° C und der Maximaltemperatur der Heizquelle liegen,
wobei die Heizquelle eine Temperatur in einem Bereich von zwischen +/- 2,5K und +/- 5K oder mehr um die Regeltemperatur (Heizungstemperatur) aufweist, indem intervallweise die Heizquelle mittels eines Relais eingeschalten und ausgeschalten wird, wobei vorzugsweise ein Intervall von weniger als 15 Minuten, vorzugsweise weniger als 3 Minuten Länge gewählt wird. Auch andere Zeitintervalle sind denkbar, wobei kürzere Zeitintervalle bevorzugt werden, da hier die Temperaturschwankungen in der Bezugsebene geringer gehalten werden können als bei längeren Zeitintervallen.

Wird die Heizquelle mit einem Multimeter verbunden, kann zudem die Stromstärke, Spannung und elektrische Leistung ermittelt werden. Diese Heizquellenparameter (z.B. t Schaltzeiten bzw. T (Heizungstemperatur) können dann einer Solltemperatur (Tsoll) in einer Bezugsebene bzw. der Oberflächentemperatur auf dem Testobjekt zugeordnet werden. Diese Daten können auch verwendet werden, um die Ein- und Ausschaltzeiten zu ermitteln.

Das Messverfahren umfasst ferner die Verfahrenschritte, wobei der vorbestimmte Abstand des Testobjektes variiert wird und die jeweilige Oberflächentemperatur am Testobjekt und/oder Strahlungstemperatur in Abhängigkeit von dem Abstand und dem Regeltemperaturbereich der Heizquelle bestimmt wird.

Um die Präzision der Messergebnisse weiter zu erhöhen, kann die Temperatur auf den Testobjekten bzw. Prestel-Dummys in den gewählten Abständen (D=0, D=1, D=2 etc.) und in Abhängigkeit der Lufttemperatur des Raumes und gewählten Oberflächentemperaturen der Heizquelle (T Heizungstemperatur) in mehreren Messzyklen wiederholt gemessen werden, um Fehler aufgrund von Temperaturschwankungen oder anderen Störfaktoren zu minimeren.

Optional kann das Messverfahren dadurch gekennzeichnet sein, dass die Winkellage der Heizquelle variiert wird.

Auf diese Weise kann die Heizquelle in verschiedenen Winkellagen vermessen werden. Dabei können Winkel der Heizquelle von einer horizontalen Ausrichtung beispielsweise an einer Zimmerdecke (90° angewinkelt in Bezug auf die Vertikale) bis zu einer vertikalen Ausrichtung wie z.B. an einer Zimmerwand sowie jegliche Positionen dazwischen von der Heizquelle vermessen werden.

Dabei können bei dem Messverfahren unterschiedliche Winkel bis maximal 180°, bevorzugt 45° oder andere beliebige Schräglagen zur Vertikalen, in Bezug auf eine Bezugsebene untersucht werden, um nicht nur eine Wand- oder Deckenmontage, sondern auch Positionen zwischen den gängigen Montagearten nachzubilden.

### System zur Regelung einer Heizquelle

Gemäß einem weiteren Aspekt der vorliegenden Erfindung wird ein System gemäß Anspruch 10 zur Regelung von wenigstens einer Heizquelle oder mehreren Heizquellen, die Strahlung im Infrarotbereich emittiert oder emittieren, bereitgestellt, um einen Raum zu beheizen, umfassend:
eine Steuervorrichtung, die ausgebildet ist, Messdaten von einem Lufttemperatursensor zu empfangen;
eine Speichereinheit zur Speicherung von Datenbankdaten, und
wobei die Steuervorrichtung ausgebildet ist, unter Verwendung der Datenbankdaten, die vorzugsweise aus der Speichereinheit abrufbar sind, und Messdaten des Lufttemperatursensors die wenigstens eine Heizquelle ein- oder auszuschalten, um eine vorbestimmte Sollwerttemperatur auf einer Bezugsebene zu regeln.

Mit Hilfe des erfindungsgemäßen Systems zur Reglung kann der Nachteil einer Heizquelle, dass die elektrische Leistung nicht gedrosselt werden soll bzw. nicht dimmbar sind, überwunden werden. Die Daten der Datenbank beruhen wenigstens teilweise auf den Ergebnissen der oben beschriebenen erfindungsgemäßen Messverfahren. In anderen Worten kann über die gemessenen Charakteristiken jedes einzelnen Heizmoduls bzw. Heizquelle genau die Strahlungsleistung bestimmt werden, welche zwischen der vorherrschenden Raumlufttemperatur und der gewünschten Solltemperatur von Nöten ist. Bei zu kühler Raumlufttemperatur kann die Temperaturdifferenz mit Hilfe der zusätzlichen Strahlungswärme der Infrarotheizquelle ausgeglichen und bei schwankender Lufttemperatur oder sich ändernder Solltemperatur intelligent angepasst werden.

Vorteilhafterweise basieren die Datenbankdaten wenigstens teilweise auf diesen vom Erfinder entwickelten Messverfahren, wobei die Datenbankdaten wenigstens folgende Daten umfassen:
Messdaten der Lufttemperatur des Raumes,
Messdaten der Oberflächentemperaturen der Heizquelle umfassend Regeltemperaturwerte; Messdaten der Oberflächentemperaturen der Testobjekte umfassend Solltemperaturwerte auf einer Bezugsebene;
berechnete Daten;
Einschalt-, Ausschalt- und Aufheizdauern;
modellgestützte Daten; und Kombinationen davon.

Dabei können die modellgestützten Daten, welche auf einem Regelungsmodell zur genauen Steuerung der Heizquelle basieren, verwendet werden. Im Gegensatz zu herkömmlichen Heizquellen wird nicht mit bekannten Thermostaten rein nach der Lufttemperatur geregelt, sondern mit Hilfe der Daten der Datenbank basierend auf den Ergebnissen des erfindungsgemäßen Messverfahrens die Heizquellen situationsabhängig angesteuert.

Mit Hilfe des erfindungsgemäßen Systems zur Regelung ist eine vorbestimmte Sollwerttemperatur für eine Bezugsebene in einem gewählten Abstand zur jeweiligen Heizquelle regelbar.

Ferner oder alternativ kann ein Relais je Heizquelle bereitgestellt werden, das via Kabel oder kabellos von der Steuervorrichtung Steuersignale empfangen kann, um eine Aufheizdauer und/oder Einschaltdauer oder Ausschaltdauer für eine oder mehrere Heizquellen anzusteuern.

Gemäß einer bevorzugten Ausführungsform des erfindungsgemäßen Systems ist der Lufttemperatursensor in einer Bezugsebene in einem vorbestimmten Abstand zur jeweiligen Heizquelle, der beliebig wählbar ist, angeordnet.

Dabei ist ein einziger Temperatursensor zur Messung der Raumlufttemperatur, der auf Höhe einer Bezugsebene angeordnet ist, ausreichend, um eine oder mehrere Heizquellen genau zu regeln. Es ist dabei ausreichend, dass egal wie viele Heizquellen im Raum montiert wurden, nur ein Temperatursensor für die Raumluft benötigt wird.

Die Datenbankdaten sind ferner ausgewählt aus der Gruppe umfassend:
durch Interpolationsverfahren bestimmte Schätzwerte umfassend Einschalt-, Ausschalt- oder Aufheizdauern oder Temperaturschätzwerte zwischen Messdaten unterschiedlicher benachbarter Temperaturwerte;
durch Interpolationsverfahren bestimmte Schätzwerte umfassend Verbrauchswerte, um zu bestimmen, wie groß die Leistung der Heizquelle ist;
geschätzte Temperaturen auf einer Bezugsebene, die in Abhängigkeit von dem Abstand der Bezugsebene zur Heizquelle berechnet werden,
geschätzte Temperaturen auf einer Oberfläche von einem Testobjekt oder Dummy, die in Abhängigkeit von dem Abstand zur Heizquelle berechnet werden, wobei das Testobjekt vorzugsweise eine definierte Wärmekapazität und Oberfläche mit vorbestimmten definierten Emissionsgrad aufweist;
durch statistische Analysen von Messdaten der abstrahlenden Oberfläche berechnete Daten umfassend arithmetisches Mittel oder Medianwerte; und/oder modellgestützt ermittelte Temperaturen auf der abstrahlenden Oberfläche und/oder auf der Bezugsebene unter Verwendung eines prädiktiven Modells, welches die Temperatur auf der Bezugsebene vorherbestimmt.

Durch Zusammenhänge zwischen Abstand von der Heizquelle zur Bezugsebene, der Oberflächentemperatur der Heizquelle in definierten Ein- und Ausschaltdauern und der Dummy-Oberflächentemperatur kann über die interpolierte Datenbank des Regelungsmodells unter Annahme gleicher Konvektionsgeschwindigkeiten (niedriger 1 m/s), bzw. einer natürlichen, freien Konvektion, prädiktiv die Oberflächentemperatur der Bezugsebene vorherbestimmt werden. Die gemessene Genauigkeit eines beliebig gewählten Szenarios lag bei Abweichungen unter 0,1 K. Das prädiktive Modell kann in beliebiger Parametervariation und hersteller- sowie heizungstypenübergreifend gängige Zustände vorherbestimmen. Mit der Festlegung durch Raumgeometrien oder einer Bereichsgröße an Wunsch-, bzw. Solltemperaturen kann über das prädiktive Modell eine passende Parameterkombination eruiert werden, welche abschließend über das Raumauslegungsmodell finalisiert wird.

Durch Einbeziehen der Verbrauchswerte von Strom der Heizquellen kann ermittelt werden, wie groß die Leistung in den verschiedenen Stadien ist, und basierend auf diesen Daten die Regelung möglichst verbrauchsarm gesteuert werden.

Gemäß einer bevorzugten Ausführungsform des Systems ist die Heizquelle ausgewählt aus der Gruppe umfassend:
Infrarotstrahler, welche Wärmeleistung mit einem Strahlungsanteil von mindestens 40 % abgeben,
Niedertemperaturstrahler mit Oberflächentemperaturen bis 100 °C;
Hochtemperaturstrahler mit Oberflächentemperaturen ab 100 °C;
Infrarot-Dunkelstrahler oder Infrarot-Hellstrahler;
elektrische Heizsysteme, welche langwellige Infrarotstrahlung emittieren/ aussenden; und/oder Photonenheizungen.

Wenn Heizquellen mit großen Abstrahlwinkeln für die Nutzeranwendung von Vorteil ist, eigenen sich Photonenheizungen, die Abstrahlwinkel bis zu 360° aufweisen.

Besonders bevorzugt werden Heizquellen verwendet, die IR-C-Strahlung aussenden, welche im langwelligen Bereich ist und Wellenlängen im Bereich von 3-10 000 µm abdeckt.

Um die Vorteile des erfindungsgemäßen Systems zur Regelung nutzen zu können sind insbesondere Heizquellen geeignet, die nicht dimmbar sind und nur ein- oder ausgeschaltet werden können.

Ferner wird ein Verfahren zur Auslegung und/oder Regelung von wenigstens einer Infrarotheizquelle unter Verwendung des oben beschriebenen Systems zur Regelung bereitgestellt, umfassend die folgenden Schritte:
Bereitstellen wenigstens einer Heizquelle oder mehreren Heizquellen, die Strahlung im Infrarotbereich emittiert oder emittieren um einen Raum zu beheizen, vorzugsweise in einem durch ein Auslegungsmodell bestimmten Anordnungswinkel und bei mehr als einer Heizquelle in einem bestimmten Abstand zueinander umfassend:
Messen einer Lufttemperatur;
Speichern und Verwendung von Datenbankdaten in einer Speichereinheit, und wobei wenigstens eine Steuervorrichtung bereitgestellt wird, um basierend auf Datenbankdaten und der gemessenen Lufttemperatur die wenigstens eine Heizquelle ein- oder abzuschalten, um eine vorbestimmte Sollwerttemperatur zu regeln.

Ferner kann eine Mehrzahl von Heizquellen und ein Innenraumpositionierungssystem (IPS) zur Detektion der Position eines oder mehrerer Personen bereitgestellt werden, wobei in Abhängigkeit von einer detektierten Person ein oder mehrere Heizquellen geregelt werden.

Ferner umfasst das Verfahren zur Regelung einer Mehrzahl von Heizquellen folgende Verfahrensschritte:
Unterteilung des Raumes in einer Mehrzahl von Zonen, wobei ein Nutzer eine Sollwerttemperatur der Steuervorrichtung für eine Zone übermitteln kann; und
wenn für zwei oder mehr Nutzer Sollwerttemperaturen für eine Zone eingeben werden, ein arithmetisches Mittel der Sollwerte für die jeweilige Zone gebildet wird.

Mit Hilfe des Innenraum-Positionierungs-System (IPS) können mobile Eingabegeräte von Nutzern wie beispielsweise Smartphones oder "Wearables" geortet werden und von diesen Daten wie eine Solltemperatur mittels drahtloser Kommunikation empfangen werden. Die Eingabe der Solltemperatur erfolgt über diese Eingabegeräte und über das IPS wird automatisch die Zone detektiert, welche mit der entsprechenden Infrarotheizung bestrahlt werden muss. Bei mehreren Eingaben der Solltemperatur wird für die Zone das arithmetische Mittel gebildet und so ergibt sich eine Temperatur für die ganze Zone. Das entsprechende Modul wird nach diesem Mittelwert geregelt.

### Kurze Beschreibung der Figuren

Weitere Merkmale und Vorteile der Erfindung ergeben sich anhand der nachfolgenden Figuren, in denen vorteilhafte Ausführungsbeispiele eines erfindungsgemäßen Haltesegments, eines Anschlusselements zur Verbindung wenigstens eines Haltesegments und eines Aufnahmekanals sowie einer erfindungsgemäßen Haltevorrichtung beispielhaft dargestellt werden, ohne die Erfindung auf die gezeigten Ausführungsbeispiele zu beschränken. Es zeigen:
**Fig. 1** zeigt Messergebnisse für die Temperaturverteilung einer herkömmlichen Infrarotheizplatte mit Temperaturen in °C;
**Fig. 2** zeigt ein schematisches Diagramm von einem Ausführungsbeispiel eines erfindungsgemäßen Systems zur Regelung von einer Heizquelle;
**Fig. 3a** schematisches Flussdiagramm eines weiteren Ausführungsbeispiels eines Regelungssystems mit einer Steuervorrichtung;
**Fig.3b** schematische Detailansicht eines Ausführungsbeispiels einer Datenbank der in **Fig. 3a** gezeigten Steuervorrichtung;
**Fig.4a** Messergebnisse der Temperaturverteilung für eine Bezugsebene in einem vorbestimmten Abstand D(x) = 100 cm;
**Fig. 4b** Messergebnisse der Temperaturverteilung für eine weitere Bezugsebene in einem vorbestimmten Abstand D(x) = 150 cm;
**Fig. 5** Messergebnisse der Temperaturverteilung bei einer schräg angeordneten Heizquelle in einem Abstand D(x) =100 cm
**Fig. 6** die Oberflächentemperatur in °C einer Heizquelle in Abhängigkeit von der Zeit in s;
**Fig. 7a** zeigt eine Ausführungsform einer Messanordnung mit einem Testobjekt;
**Fig. 7b** und **Fig. 7c** zeigen Details des in **Fig.** 7a gezeigten Testobjektes;
**Fig. 8** Strahlungstemperatur in Abhängigkeit von Zeit und Abstand;
**Fig. 9** Einschaltdauern einzelner Solltemperaturen als Beispiel in einer Bezugsebene mit dem Abstand 1,5 m zur Heizquelle in Abhängigkeit von der Lufttemperatur;
**Fig. 10** Ausschaltdauern einzelner Solltemperaturen als Beispiel in einer Bezugsebene mit dem Abstand 1,5 m zur Heizquelle in Abhängigkeit von der Lufttemperatur;
**Fig. 11** ein Ausführungsbeispiel eines Systems zur Regelung einer Heizquelle in einem Raum, der von einer Person genutzt wird;
**Fig. 12** ein weiteres Ausführungsbeispiel eines Systems zur Regelung einer Heizquelle für zwei Nutzer;
**Fig. 13** zeigt ein System zur Regelung eines Raumes, der von einer Mehrzahl von Personen genutzt wird.

### Detaillierte Figurenbeschreibung

**Fig. 1** zeigt Messergebnisse der Oberflächentemperaturverteilung in der Einheit Grad Celsius [°C] einer herkömmlichen plattenförmigen Infrarotheizquelle im Betrieb. Es wird deutlich, dass keine Homogenität in Bezug auf die Temperarturverteilung vorliegt. Eine inhomogene Temperaturverteilung zeigt sich insbesondere an den Rändern. Temperaturmaxima finden sich entlang des in Schleifen angeordneten Heizdrahts, während zwischen benachbarten Heizdrahtabschnitten die Temperatur niedriger ist. Die dunklen Linien sind Drähte der Temperaturfühler, welche irrelevant für den Aufbau der Infrarotheizung sind und in keinem Zusammenhang stehen. Aufgrund dieser nachgewiesenen Inhomogenität ist es notwendig, die tatsächliche Temperaturverteilung auf einer vorbestimmten Fläche der Oberfläche von Infrarotheizquellen verschiedener Hersteller genauer zu ermitteln.

**Fig. 2** zeigt ein schematisches Diagramm von einem Ausführungsbeispiel eines erfindungsgemäßen Systems 250 zur Regelung einer Heizquelle 500, die Strahlung im Infrarotbereich emittiert. Ein Nutzer 11 kann über eine Eingabevorrichtung 1 oder über ein geeignetes "User-interface" beispielweise eines Thermostats, Smartphones oder über "Wearables" einen gewünschten Temperatursollwert 111 eingeben, der an die Steuervorrichtung 3 übertragen wird. Ein Temperatursensor 201 zur Messung einer Lufttemperatur-Istwert 2 übermittelt automatisch eine im Raum vorherrschende Lufttemperatur 221. Die Steuervorrichtung 3 weist eine Datenbank 300 auf. In Abhängigkeit von den empfangenen Temperatursollwert 111 des Nutzers, der aktuell gemessenen Lufttemperatur 221 und der in der Datenbank 300 gespeicherten Daten kann eine geeignete Schaltzeit t=301 ermittelt werden. Das vorzugsweise in der Steuervorrichtung 3 angeordnete Schaltgerät regelt die Schaltzeit 301 der Heizquelle 500. Dabei umfassen die Schaltzeit 301 Aufheiz-, Ein- und Ausschaltdauern, um mit der installierten Heizquelle 500 den Temperatursollwert 111 für den Nutzer 11 zu erreichen.

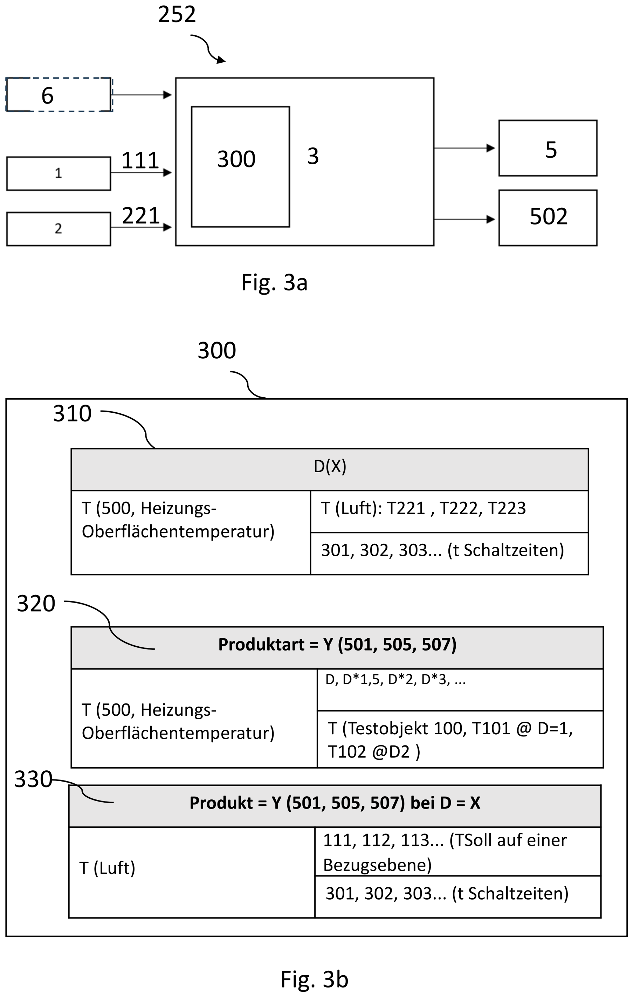

**Fig. 3a** zeigt ein weiteres schematisches Flussdiagramm eines weiteren Ausführungsbeispiels eines Regelungssystems 252 mit einer Steuervorrichtung 3 zur Regelung von wenigstens zwei Infrarotheizquellen 5 und 502. **Fig. 3b** zeigt eine schematische Detailansicht eines Ausführungsbeispiels einer Datenbank 300 der Steuervorrichtung 3 der **Fig. 3a****.** Es können auch mehr als die in **Fig. 3a** gezeigten zwei Infrarotheizquellen 5 und 502 angeschlossen werden und mit dem Regelungssystem 252 geregelt werden.

Wie in **Fig. 2** empfängt die Steuervorrichtung 3 über eine Eingabevorrichtung 1 einen gewünschten Temperatursollwert 111, die an die Steuervorrichtung 3 weitergegeben wird. Zudem wird eine Lufttemperatur-Istwert 2 übermittelt, die hier beispielhaft als eine Lufttemperatur 221 gezeigt wird (siehe Pfeil). Optional können weitere Daten an die Steuervorrichtung 3 weitergegeben werden. Die gestrichelte Eingabebox 6 zeigt an, dass diese Systemkomponente nur optional d.h. nicht zwingend bereitgestellt wird. Als optionale Parameter können Positionierungsdaten 6 bereitgestellt werden. Wenn die Infrarotheizquellen automatisch ihre Position verändern können, kann man mit Hilfe der Steuervorrichtung zusätzlich zu der Regelung der Schaltzeiten (t=301) die Positionen einer oder mehrerer Infrarotheizquellen verändern.

**Fig. 3b** zeigt Details der Datenbank 300 und insbesondere die in der Datenbank 300 gespeicherten Daten. Die ersten Daten 310 beziehen sich auf die Heizquelle 500 und die Temperaurverteilung verschiedener Infrarotheizquellen. Vorzugsweise können die vorab vermessenen Heizquellen mit den ermittelten Mittel-, Medianwerten oder anderen statistischen Parametern der Oberflächentemperatur der Heizquelle charakterisiert werden. Durch ein spezielles Messverfahren und Messanordnung können jedem Mittel-/Medianwert der jeweils vermessenen Heizquelle Lufttemperaturen, d.h. T (Luft) wie z.B. T221, T222, T223 in vorgegebenen Abständen D(x) sowie Schaltzeiten 301, 302, 303 (Zeit t in Minuten oder Sekunden für Ein- bzw. Ausschaltzeiten) zugeordnet werden.

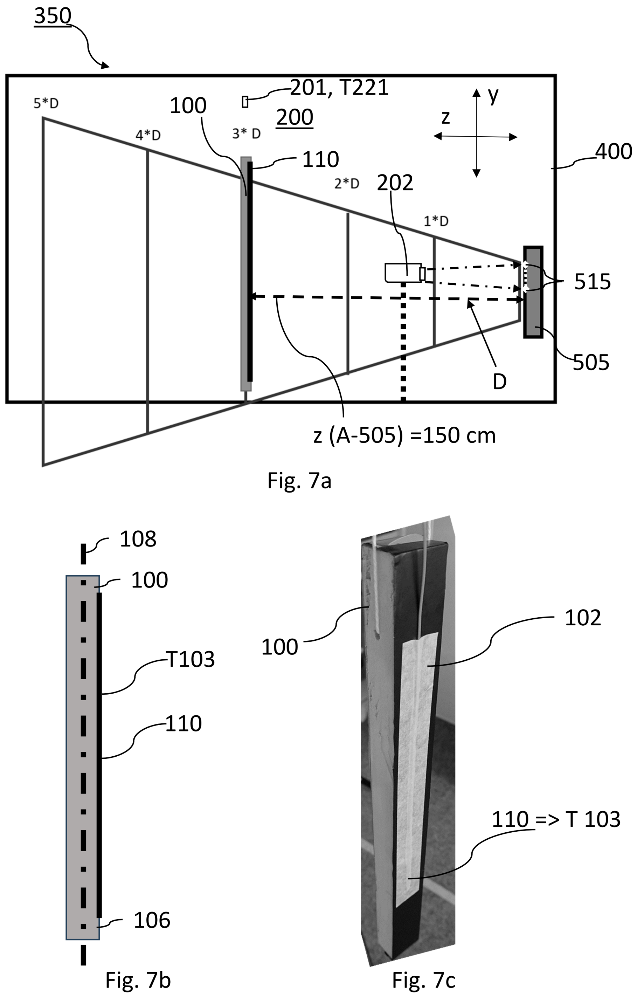

Das erfindungsgemäße Messverfahren sieht zudem die Messung von Messdaten wie Temperaturen mit Hilfe von wenigstens einem Testobjekt in vorbestimmten Abständen zur Heizquelle 500 vor, wie es beispielsweise in **Fig. 7a** mit dem Referenzzeichnen 100 gezeigt wird. Die weiteren Daten 320 umfassen Wertepaare der Mittel- oder Mediantemperaturwerte der Heizquellenoberflächen und von Temperaturmesswerten an einem Testobjekt 100, das in verschiedenen Abständen D zur Heizquelle 5 anordenbar ist. Damit ergeben sich Temperaturen des Testobjektes in verschiedenen Abständen wie z.B. T101 @ D=1, T102 @D=2.

Weitere Daten 300 der Datenbank beziehen sich auf Temperatursollwerte (Tsoll), die Messwerten auf einer Bezugsebene in vorbestimmten Abständen (Vielfache von D) in Abhängigkeit von der Lufttemperatur entsprechen. Nicht gemessene Werte können zusätzlich durch Interpolation bestimmt werden und in der Datenbank gespeichert werden. In einer Matrix können die Testobjekt- Oberflächentemperaturen (T101, T101 bei verschiedenen Abständen D), Lufttemperaturen und zugehörigen Einschalt-, Ausschalt- und Aufheizdauern der Heizquellen in der Datenbank 300 gespeichert werden und für die Regelung der jeweils vermessenen Heizquelle (Produktart = Y (501, 505, 507 etc.) verwendet werden.

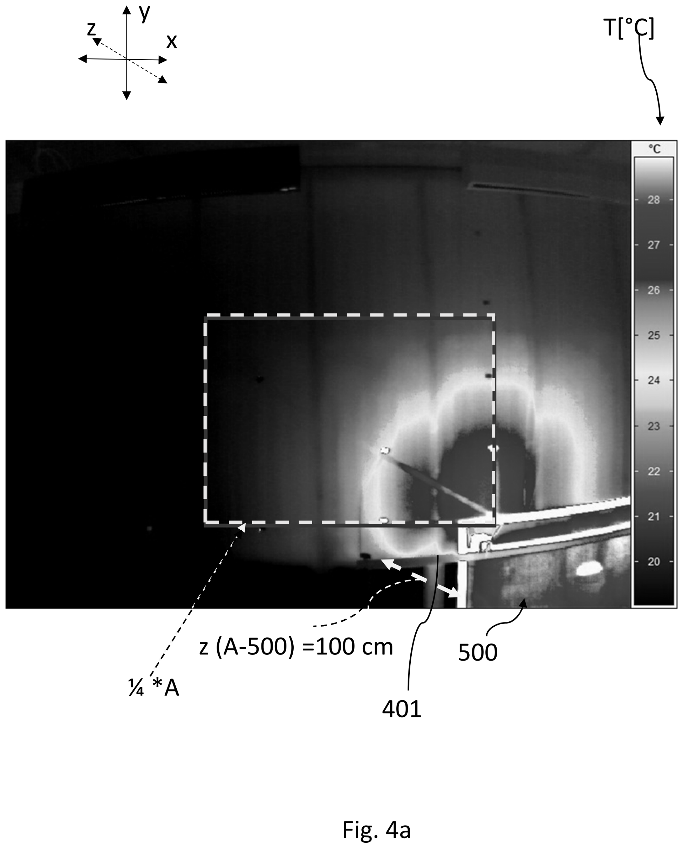

**Fig. 4a** zeigt Messergebnisse eines optischen Pyrometers, das die Temperaturverteilung auf einer Bezugsebene misst, wobei die Heizquelle 500 in einem vorbestimmten Abstand D(x) = 100 cm und parallel zur Bezugsebene angeordnet ist. In diesem Fall wurde die plattenförmige Heizquelle vertikal in einem Abstand von einem Meter zu der Raumwand (hier Bezugsebene) angeordnet und die Temperaturverteilung an der Raumwand mit einer Wärmebildkamera gemessen. Die obere linke Ecke der Heizquelle 500 ist auf diesem Wärmebild zu sehen und für die Messergebnisse nicht zu berücksichtigen. Der Abstand von 100 cm zu der Bezugsebene 401 ist mit dem Doppelpfeil z (A-500) =100 cm veranschaulicht. Das Feld A in der gestrichelten Box entspricht 25% bzw. ¼ der gesamten zu beheizenden Fläche A. Es ist auf **Fig. 4a** zu sehen, dass ein Temperaturmaximum von bis zu 28°C in der Nähe des projizierten Zentrums der Heizquelle 500 auftritt. Je weiter man sich von dem Zentrum der Heizquelle entfernt, desto mehr nehmen die Temperaturen ab (z.B. links außerhalb des Feldes A werden nur noch Temperaturen unter 20° C gemessen. Daher würde mit dieser Heizquelle nur das Feld A mit Temperaturen > 20° C ausreichend beheizt werden können. Wenn in dem Abstand z (A-500) =100 cm eine größere Fläche beheizt werden sollte, würde eine weitere Heizquelle benötigt, die so installiert werden würde, dass die beheizten Flächen A aneinander angrenzen.

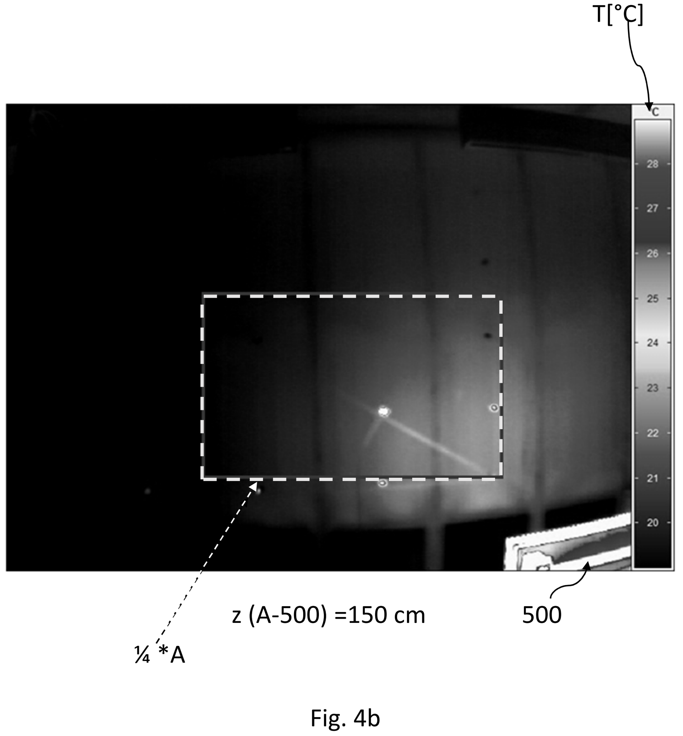

**Fig. 4b** zeigt Messergebnisse der Temperaturverteilung für eine weitere Bezugsebene in einem größeren Abstand von D(x) = 150 cm. Für diese Messungen wurde die Heizquelle zur selben Raumwand (Bezugsebene 401) in 1,5m Abstand und gleicher Neigung (vertikal bzw. parallel zur Raumwand) aufgestellt wie in **Fig. 4a****.** In **Fig. 4b** ist veranschaulicht, dass das Temperaturmaximum aufgrund des größeren Abstandes eine geringere Temperatur als in **Fig. 4a** aufweist, wobei hier im projizierten Zentrum die Maximalwerte zwischen etwa 22°C und 24 °C liegen.

Es wird wie in Fig. **4a** in **Fig. 4b** eine Fläche ¼ A eingezeichnet (gestricheltes Rechteck), um damit eine beheizbare Fläche A (4*1/4) zu ermitteln. Zur linken Seite der Fläche A ist wieder eine Abnahme der Temperatur unter 20°C sichtbar. Das Quadrat ist ein Viertel der Fläche und muss in beide Achsenrichtungen (x nach rechts bzw. Y nach unten) verdoppelt werden, um die auf eine bestimmte Solltemperatur beheizbare Gesamtfläche zu ermitteln. Auf diese Weise kann für den jeweiligen Mittel- oder Medianwert der Heizquelleoberfläche eine Fläche A zugeordnet werden, die eine vorgegebene Solltemperatur (als Mittelwert oder Medianwert der Fläche) auf einer Bezugsebene erreicht (für Fig. 4b ist die Bezugsebene in z-Richtung in einem Abstand 150 cm von der Heizquelle positioniert).

Die Messungen werden in anderen Abständen als den in der **Fig. 4a** und **b** gezeigten Abständen wiederholt, um die beheizbare Fläche mit diesem Modul in anderen Abständen für diese spezifische Heizquelle in Vertikalposition zu bestimmen.

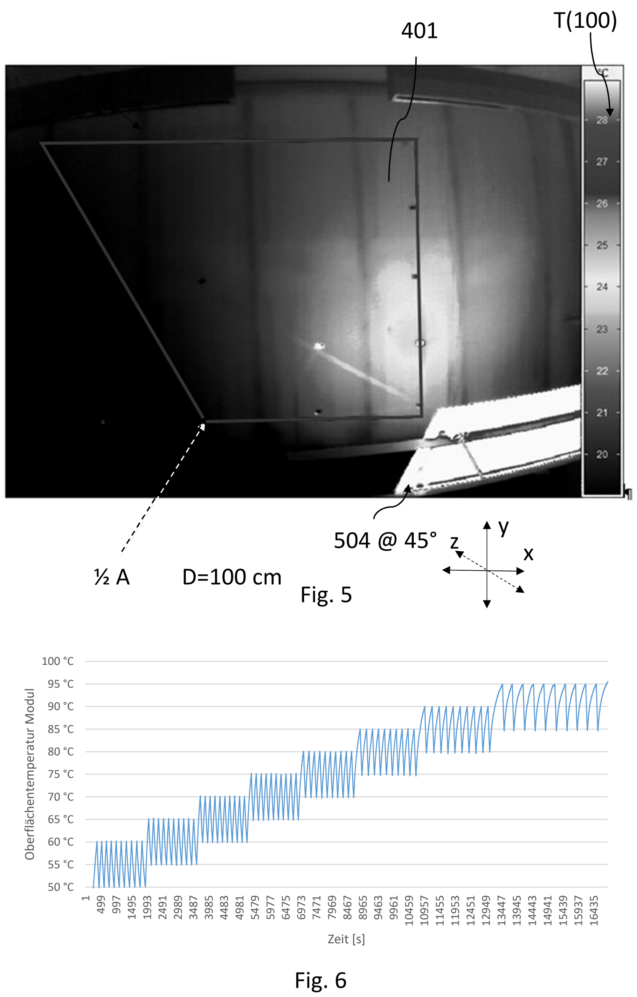

Weiterhin kann der Strahlungswinkel für ein Modul variiert werden und damit die optimalen Positionierungsdaten einer Heizquelle für bestimmte Anwendungen bestimmt werden. Hierzu werden die Messungen mit einer angewinkelten Heizquelle durchgeführt, wie es in **Fig. 5** gezeigt wird.

**Fig. 5** zeigt Messergebnisse eines Pyrometers für die Temperaturverteilung bei einer schräg angeordneten Heizquelle 504 in einem Abstand D(x) =100 cm. Die Heizplatte ist in Bezug auf die Vertikale 45° angewinkelt, wobei die Heizplattenoberfläche der Raumdecke zugewandt ist. Ein Teil der Heizquelle 504 (linkere obere Ecke) ist auf dem Bild von hinten zu sehen, aber nicht für die Auswertung zu berücksichtigen, da hier nur die Temperaturwerte auf der Bezugsebene in Abstand 100 cm zur Heizquelle berücksichtig werden.

Die mit einer Wärmebildkamera gemessene Temperaturverteilung auf der Bezugsebene zeigt ein Temperaturmaximum mit etwa 24 °C, das geringer ist als das Maximum der Fig. 4a. Die Position des Maximums in der **Fig. 5** ist im Vergleich zu dem Temperaturmaximum der **Fig. 4a****,** das sich in etwa gegenüber dem Mittelpunkt bzw. projizierten Zentrum der Heizquellenplatte befindet, höher. Für die vermessene Bezugsebene in 1 m Abstand, welche vertikal in Y-Richtung angeordnet ist, ergibt sich bei dem 45 °angewinkelten Modul ein eher trapezförmiges Feld (siehe 1/2 A). Der eingerahmte Bereich 1/2A ist hier das halbe Feld und wird an der rechten Seite gespiegelt, um die gesamte Fläche A zu erhalten. Für eine Auslegung eines Raumes mit 2*1/2 A = A kann diese Temperaturverteilung mit geringerem Temperaturmaximum und gleichzeitig weiterer Ausdehnung des beheizbaren Feldes A für die Behaglichkeit der Nutzer relevant sein. Durch die Schrägstellung ergibt sich eine Temperaturverteilung, deren vertikale Erstreckung von Temperaturen im Bereich zwischen 22,5 °C und ca. 23,5 °C länger ist als in **Fig. 4a****,** was für bestimmte Nutzungsbedingungen von Vorteil sein kann.

**Fig. 6** zeigt die Oberflächentemperatur in °C eines Heizmoduls in Abhängigkeit von der Zeit in s. Für das erfindungsgemäße Messverfahren wird in diesem Beispiel die Temperatur der Heizquelle schrittweise nach 10 Intervallen in 5°C Schritten von der niedrigsten Heizungstemperatur der Heizquelle von 55°C auf die höchste Heizungstemperatur von 90°C erhöht bzw. geregelt. Dabei ist für die Regelung der Heizungstemperatur entweder der Mittelwert oder auch der Medianwert möglich. Die in **Fig. 6** gezeigte Zeitreihe wird nach etwa 4,5 h (16435s) beendet.

Zu Beginn der Messreihe wird eine Heizungstemperatur von 55°C eingestellt und so geregelt, dass die Heizquelle intervallweise mittels einem Relais ein- bzw. ausgeschalten wird. Insbesondere wird bei etwa 0 Sekunden die Temperatur von 55 °C (d.h. Regeltemperatur +/-5K) eingestellt und die Heizquelle bleibt eingeschalten bis der Maximalwert von 60 °C erreicht wird. Danach wird das Heizmodul ausgeschalten, um eine Abkühlung bis maximal -5 K von der Regeltemperatur (Heizungstemperatur) zu erlauben, was einer Mindesttemperatur von 50°C entspricht. Dieser Zyklus von etwa 3 Minuten Dauer wird je Temperaturstufe ca. 10 mal wiederholt, sodass jede Stufe etwa eine halbe Stunde dauert.

Zum Erreichen der nächsten Stufe mit einer Regeltemperatur von 60°C wird die Einschaltdauer so verlängert, dass die Temperatur von dem Mindestwert bis zu einem 10K höheren Maximalwert erhöht wird. Wurde das neue Maximum von z.B. 65°C erreicht, bleibt das Heizmodul solange ausgeschalten, bis die neue Minimumtemperatur von 55°C (Regeltemperatur -5K) erreicht ist.

Durch die Vielzahl von Messzyklen (hier 10) nähert sich die Solltemperatur am Ende einer Stufe einem Wert an (hier nicht gezeigt), der repräsentativ für diese Temperaturstufe ist. Auf diese Weise kann man einer vorgegebenen Regeltemperatur, eine Solltemperatur zuordnen. Vorzugsweise wird die Solltemperatur in einer Bezugsebene in einem vorbestimmten Abstand von dem Heizmodul gemessen. Mögliche Bezugsebenen und ein Temperatursensor zur Erfassung einer vorbestimmten Oberfläche eines Heizmoduls wird schematisch in der **Fig. 7a** dargestellt.

**Fig. 7a** zeigt schematisch eine Heizquelle 505, wobei ein Temperatursensor 202, der als optisches Pyrometer ausgebildet ist, eine vorbestimmte Oberfläche 515 vermisst. Diese Messanordnung 350 befindet sich in einem Raum 400. Zudem wird ein Temperatursensor 201 bereitgestellt, der zur Messung einer Lufttemperatur T221 der Luft 200 ausgebildet ist. Der Temperatursensor 201 für die Lufttemperatur befindet sich in der Höhe einer Bezugsebene, aber vorzugsweise nicht im Bereich des Strahlungsfeldes der Heizquelle.

In dem gezeigten Beispielsfall wird die Lufttemperatur T221 auf Höhe einer Bezugsebene 3*D gemessen. Diese Bezugsebene A erstreckt sich parallel zur Heizquellenoberfläche (d.h. in y-Richtung) und ist in einem Abstand von 1,5 m angeordnet (siehe gestrichelter Pfeil z (A-505) =150 cm), wobei der Abstand D = 0,5m ist. Ferner illustriert Fig. **7a** weitere Bezugsebenen, die parallel und in anderen Abständen zur Heizquelle angeordnet sind. In der beispielhaften Ausführungsform des in **Fig. 7a** gezeigten Messverfahrens wurden 5 Bezugsebenen schematisch gezeigt, die jeweils einen Abstand von etwa 0,5 m zueinander haben (5*D= 2,5 m, 4*D = 2 m, 3*D = 1,5 m, 2*D=1 m und 1*D=0,5 m). Andere Werte für den Abstand und eine andere Anzahl von Bezugsebenen können in Abhängigkeit von der Geometrie des zu vermessenden Raumes gewählt werden.

Weiterhin zeigt **Fig. 7a** ein Testobjekt (100), wobei die der Heizquelle zugewandte Testoberfläche 106 einen vorbestimmten Emissionsgrad und einen Temperatursensor 110 aufweist. Jedes Modul hat spezifische Ein- und Ausschaltdauern in Abhängigkeit des Abstands. Deshalb ist es wichtig zu wissen, wie die Bezugsebene ausgerichtet ist (hier sind 5*D, 4*D, 3*D, 2*D, 1*D parallel zur Heizquelle, könnte aber auch alternativ in einem bestimmten Winkel zur Heizquelle sein) und in welchem Abstand zum Heizquellenmodul die Bezugsebenen eingerichtet wird.

**Fig. 7b** zeigt eine Detailansicht des in **Fig. 7a** dargestellten Testobjektes 100. An der einen Seitenoberfläche 106, die während des Messverfahrens der Heizquelle 505 zugewandt ist, ist der Temperatursensor 110 angeordnet, um eine aktuelle Temperatur T 103 zu messen. Das Testobjekt 100 ist langgestreckt und weist eine Längsachse 108 auf (siehe Strich-Punkt Linie).

**Fig. 7c** zeigt ein schwarz-weiß Foto einer Ausführungsform eines Testobjektes 100. Der Temperatursensor 110 wurde mit Hilfe eines herkömmlichen Kreppbandes 102 befestigt. Dieses Kreppband weist einen Emissionsgrad von mindestens 70 %, vorzugsweise 95 % auf. In einer bevorzugten Ausführungsform des Testobjektes kann der Temperatursensor ein Präzisionstemperaturfühler, PT 100 oder PT 1000 oder ein anderer geeigneter Sensor zur Messung der Temperatur T103 sein. Dieses Testobjekt wird als Prestel-Dummy definiert.

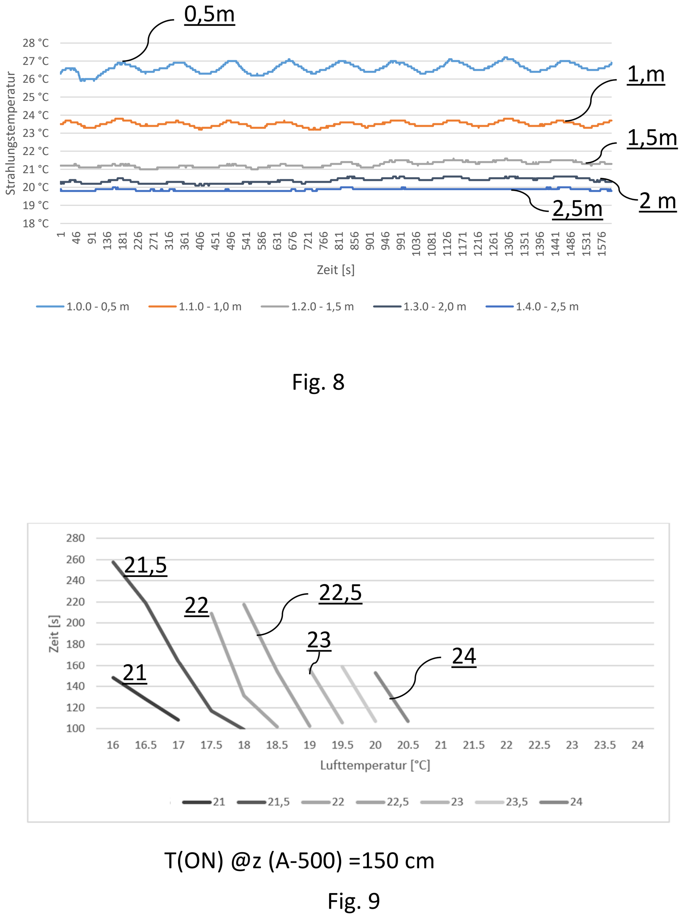

**Fig. 8** zeigt die Strahlungstemperatur in Abhängigkeit der Zeit und des Abstandes bei einer Heizungstemperatur auf der Oberfläche (Oberflächentemperatur) der Heizquelle von 70°C. Jede Kurve zeigt einen anderen Abstand in Bezug auf die Heizquelle. Dies sind Messwerte, welche sich in diesem Zustand auf der Testoberfläche messen lassen. Durch die Mittel- oder Medianwertbildung kann eine Zuordnung zwischen Heizungstemperatur, der Lufttemperatur und der Oberflächentemperatur des Testobjekts hergestellt werden. Nach einer anschließenden Interpolation können die abweichende ganzzahlige Temperaturwerte auf der Oberflächentemperatur z.B. den Ein- und Ausschaltzeiten zugeordnet werden und damit eine Regelung auf beliebige ganzzahlige Solltemperaturen oder auch Werten dazwischen realisieren. Je weiter man von der Heizquelle entfernt ist, desto mehr nähert sich die Strahlungstemperaturkurve einem flachen Verlauf an. Im Abstand von 2,5 m (unterste Kurve unterhalb von 20°C) ist nahezu keine Schwankung nach oben oder unten zu erkennen. Allgemein gilt nach dem Abstandsquadratgesetz, dass die Strahlungsintensität bei doppelten Abstand um das Vierfache abnimmt.

**Fig. 9** zeigt einen Ausschnitt der Einschaltdauer in Sekunde [s] von unterschiedlichen Sollwertemperaturen bei einem Abstand von 1,5 m. Die Zeitkurve ist in Abhängigkeit der Lufttemperatur in °C für die Sollwerttemperatur bei 21°C ist auf der Höhe der Zeitachse abgeschnitten. Je wärmer die Lufttemperatur im Raum, desto kürzer die notwendigen Einschaltdauern. D.h. bei der 24°C-Linie auf der Höhe von 20,5 °C Lufttemperatur ergibt sich eine Einschaltdauer zwischen 150 s und etwa 105 s. Bei einer Lufttemperatur von 19° ist die Einschaltdauer für eine Sollwerttemperatur von 22,5 °C ca. 100°s. Bei einer Lufttemperatur unter 16,5°C beträgt die Einschaltdauer für eine Sollwerttemperatur von 21,5 °C über 220 s.

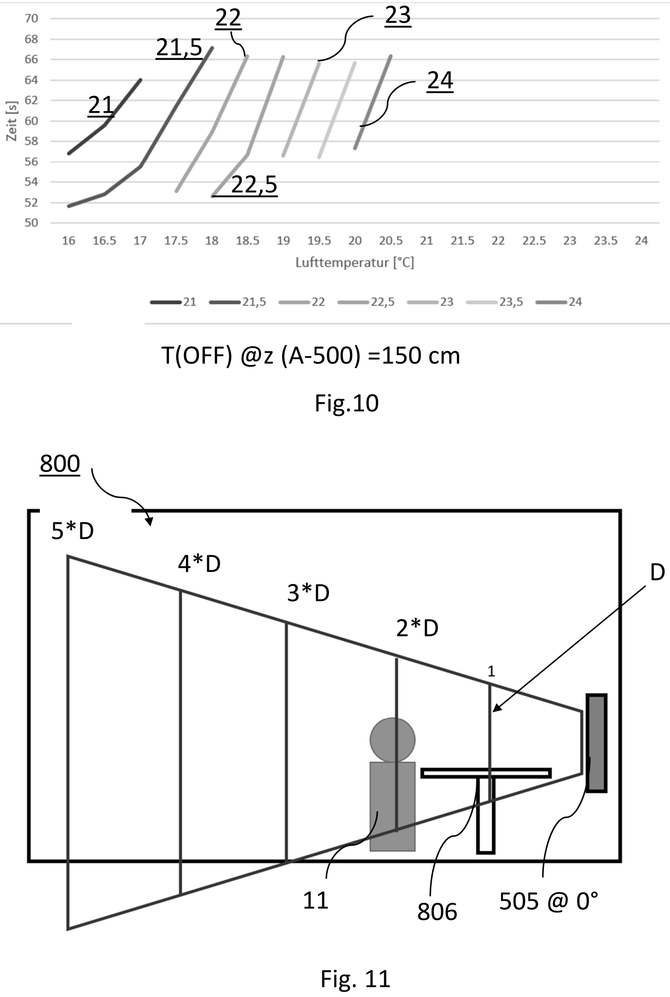

**Fig. 10** zeigt einen Ausschnitt der zu Figur 9 korrespondierenden Ausschaltdauern. Hier werden die gleichen Sollwerttemperaturen (von 21 °C in 0,5°C Schritten erhöht bis zu 24 °C) und in Abhängigkeit von der Zeit [s] sowie der Lufttemperatur in °C gezeigt. Die Ausschaltdauern sind wesentlich kürzer als die Einschaltdauern und abhängig von der Heizquelle. Bei einer Sollwerttemperatur von 24°C liegt die Ausschaltdauer zwischen 56,5 s bei 20°C Lufttemperatur und etwa 66,1 s bei 20,5°C Lufttemperatur. Figuren 9 und 10 zeigen, dass wenn sich die Lufttemperatur ändert, auch die Ein- und Ausschaltdauer entsprechend angepasst wird. Dies gilt auch bei der Änderung der Solltemperatur über den Nutzer. So können mit Hilfe der Messergebnisse in einer Datenbank alle relevanten Informationen für jeden einzelnen Schnittwert spezifisch für die vermessene Infrarotheizquelle hinterlegt werden. Die Auflösung der Temperaturen kann durch die Interpolation beliebig angepasst werden und auf ganzzahlige Werte, Werte in einer Abstufung von 0,5 oder auch beliebig klein von 0,1 bis 0,001 berechnet werden. Zu beachten ist, dass ein Mensch kleine Temperaturänderung nicht ausreichend genau wahrnehmen kann, weshalb eine sinnvolle Abstufung zu wählen ist.

In **Fig. 11** wird ein System 800 zur Regelung beispielhaft gezeigt, wobei ein Nutzer 11 in einem Einpersonen-Büro anwesend ist. Ein Heizmodul 505 ist vertikal (d.h. nicht angewinkelt zur Raumwand bei 0°) in der Nähe einer Raumwand aufgehängt und davor ist ein Schreibtisch 806 angeordnet, der bei Betrieb der Heizquelle 505 von dieser bestrahlt wird. Bei diesem Anwendungsfall müsste das System 800 zur Regelung bzw. das Regelungsmodell auf den "Abstand 2" eingestellt werden. Dieser "Abstand 2" entspricht z.B. ca. 100 cm, wenn der Abstand ein halber Meter ist, i.e. 1*D= 0,5m. Da hier nur ein Nutzer 11 bestrahlt werden soll, kann der Raum mit dieser einen Heizquelle 505 bereits fertig ausgelegt werden.

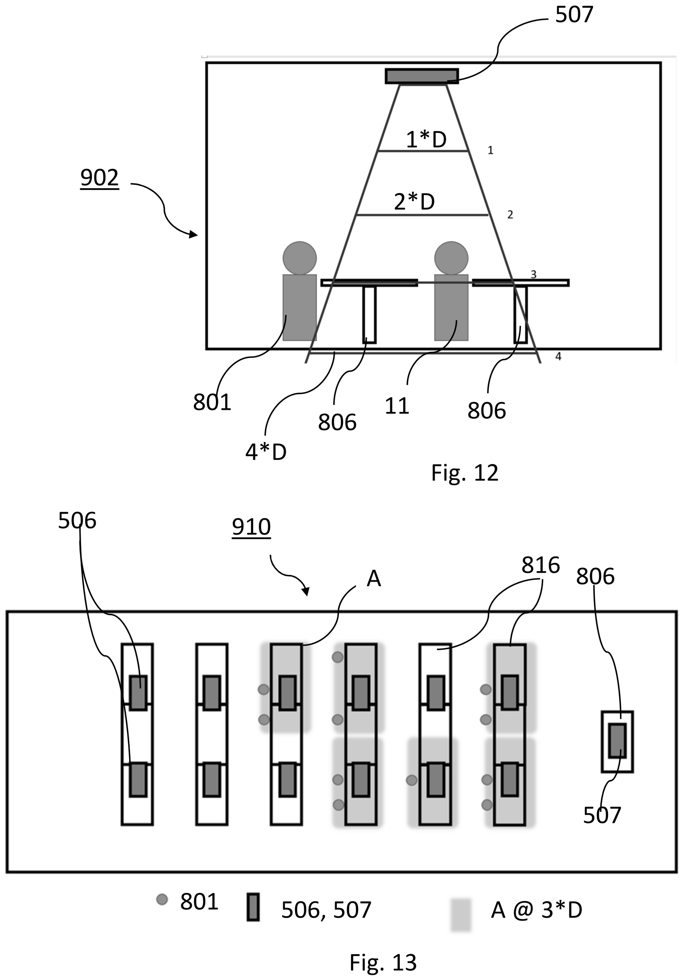

**Fig. 12** zeigt ein weiteres Ausführungsbeispiel eines Systems zur Regelung 902 umfassend eine Heizquelle 507. Unter der Heizquelle 507 befinden sich 2 Tische 806 und zugehörige Nutzer 11 bzw. Nutzer 801. In diesem Fall liegt eine Deckenmontage der Heizquelle 507 vor, wobei die Heizquellenoberfläche 90° zur Vertikalen bzw. horizontal angeordnet ist. Bei Annahme 1*D= 0,5 m ist der Raum in dieser Ausführungsform etwa 2 m hoch bzw. 4*D. Aufgrund der Deckenmontage ist der Abstand der Heizquelle 507 zu dem Nutzer 11 größer als in dem in **Fig. 11** gezeigten Fall.

Für die Regelung des Systems 902 wird wieder eine Bezugsebene gewählt, die parallel zu der Heizflächenoberfläche angeordnet ist. In diesem Ausführungsbeispiel des Systems 902 ist die Heizquelle 507 parallel zu der Oberfläche der Tisches 806 bzw. zu der Raumdecke angeordnet. Der für den Nutzer 11 optimale Abstand ist der "Abstand 3", der in Realität z.B. ca. 150 cm misst. In dem System 902 bzw. dem Regelungsmodell wird der richtige Abstand für die Heizquelle bzw. Modulvariante hinterlegt, damit bei diesem Anwendungsfall der größere Abstand berücksichtigt wird. Im Betrieb der Heizquelle 507 mit den aus der Datenbank gespeicherten Daten können die beiden Nutzer 801 und 11 ausreichend bestrahlt werden, sodass eine gewählte Solltemperatur auf der Tischebene erreicht wird.

Mit dem Wissen, dass der Abstand von ca. 150 cm bei dem Ausführungsbeispiel 902 notwendig ist, werden aus der Datenbank Heizquellen bzw. Modultypen ausgewählt, welche in Frage kommen. Beispielsweise kann bei einem Hersteller einer leistungsschwachen Heizquelle ab einem Abstand von größer als 100 cm nicht mehr geregelt werden, weil die Strahlungsintensität bei größer als 100 cm zu gering wird. Daher müssen für das System 902 ausreichend leistungsstarke Heizquellen oder Module ausgewählt werden. Deshalb kommen für unterschiedliche Anwendungsfälle unterschiedliche Heizquellen 507 bzw. Module in Frage.

**Fig. 13** zeigt eine Draufsicht eines Systems 910 zur Regelung eines Mehrpersonenraumes mit einer Mehrzahl von Mehrpersonentischen 816 (6 pro Tischreihe) und einen Einzeltisch 806. Eine derartige Anordnung ist z.B. in einem Hörsaal einer Universität anzufinden. Für den Einzeltisch wurde eine Heizquelle 507 und für die anderen Tische je zwei beabstandete Heizquellen 506 ausgewählt. In diesem beispielhaften Fall ist der Strahlungsbereich der Heizquelle 506/507 und damit eine Zone relativ klein und kann 3 Sitzplätze aufheizen. Daher werden für 6 Plätze bzw. Nutzer (siehe Nutzer 801 als graue Kreise dargestellt) pro Reihe 2 Module oberhalb der Tische 816 an die Decke installiert und dies entsprechend der Anzahl der Reihen wiederholt. Nach diesem Prinzip kann auch der ganze Raum ausgelegt werden. Entsprechend der für jede Heizquelle 506 bzw. 507 ermittelte Feldgröße A, welche mit Hilfe der bereits beschriebenen Messmethoden (siehe z.B. **Fig. 4b** für 150 cm) definiert wurden, kann der ganze Raum beheizt werden.

Zudem ist für das System 910 der Regelung in **Fig. 13** möglich, dass nur die Zonen aktiviert werden, welche mit Nutzern 801 belegt werden. Über ein sogenanntes Innenraumpositionierungssystem (IPS) kann die Position eines jeden Gebäudenutzers bestimmt werden und beispielsweiße über eine App an die Steuervorrichtung (nicht gezeigt) der Heizquelle kommuniziert werden. So kann die gewünschte Solltemperatur der Steuervorrichtung mitgeteilt werden und über das IPS die entsprechende Infrarotheizquelle für diese Zone (hier jeweils grau hinterlegte Flächen A bei 3*D = 1,5 m von der Deckenheizquelle entfernt) in Betrieb gesetzt werden. Dadurch lässt sich der Raum in Zonen unterteilen, welche inhomogen beheizt werden können.

Ein anderer nicht dargestellter Anwendungsfall zur Nutzung eines IPS wäre beispielsweise, dass bei Sonnenschein die Person, welche nahe an der Fensterseite sitzt, die Heizquelle anders einstellt, da sich diese Person durch die zusätzliche Wärmestrahlung der Sonne eine andere Temperatur der Infrarotheizung wünscht im Vergleich zu der weiter im Raum sitzenden Person. Bei mehreren Eingaben in einer Zone wird über das arithmetische Mittel der Sollwert für die Temperatur in dieser Zone ermittelt und festgelegt. Sollte diese kostenintensivere Lösung nicht gewünscht werden, kann auch ein Regler für jedes Modul den Betriebszustand und die Solltemperatur bestimmen. Ebenfalls kann auch bereits bei der Installation des Systems eine Solltemperatur fest vorgegeben werden und nur noch über einzelne Schalter die Heizquellen einzeln in oder außer Betrieb gesetzt werden.

### Bezugszeichenliste

- 1: Eingabevorrichtung für Temperatur Sollwert
- 2: Lufttemperatur Istwert
- 3: Steuervorrichtung umfassend Schaltgerät
- 5: Heizquelle
- 6: Optionale Positionierungsdaten
- 11: Nutzer
- 100: Testobjekt
- 101: Nutzer Sollwerttemperatur
- 102: Kreppband
- 106: eine der Heizquelle zugewandte Testobjektoberfläche
- 108: Längsachse des Testobjektes
- 110: Temperatursensor am Testobjekt
- 111, 112, 113: Solltemperatur (Tsoll)
- 200: Luft
- 201: Temperatursensor für die Lufttemperatur
- 221: Lufttemperatur (T221)
- 250: System zur Regelung
- 252: Regelungssystem
- 300: Datenbank
- 301, 302, 303: Schaltzeiten wie Ein- (inklusive Aufheizdauer) und Ausschaltzeiten
- 310: Erste Daten der Datenbank
- 320: Weitere Daten bezogen auf das Testobjekt
- 330: Weitere Daten und Wertepaare u.a. bezogen auf eine Bezugsebene
- 350: Messanordnung
- 400: Raum
- 401: Bezugsebene = X*D
- 500: Heizquelle
- 502: zweite Infrarotheizquelle
- 504: zur Vertikalen 45° angewinkelt angeordnete Heizquelle
- 505: vertikal angeordnete Heizquelle
- 506: paarweise horizontal an Decke angeordnete Heizquellen
- 507: horizontal an Decke angeordnete Heizquelle
- 515: vorbestimmte Fläche der Oberfläche der Heizquelle (abgekürzt: vorbestimmte Oberfläche)
- 800: Ausführungsbeispiel eines Systems zur Regelung
- 801: Nutzer
- 806: Einzeltisch
- 816: Mehrfachtisch
- 902: weiteres Ausführungsbeispiel eines Systems zu Regelung
- 910: weiteres Ausführungsbeispiel eines Systems zu Regelung
- A: beheizbare Fläche
- D: Abstand
- 1*D: erste Bezugsebene
- 2*D: zweite Bezugsebene
- 3*D: dritte Bezugsebene
- 4*D: vierte Bezugsebene
- 5*D: fünfte Bezugsebene
- T101: Oberflächentemperatur des Testobjektes bei Abstand D=1
- T102: Oberflächentemperatur des Testobjektes bei Abstand D=2
- T103: Oberflächentemperatur des Testobjektes bei Abstand D=3
- T221, T222, T223: Lufttemperatur

## Patentansprüche

1. Messverfahren zur Erfassung von Strahlungseigenschaften einer Heizquelle (500, 504, 505, 506, 507) umfassend die folgenden Schritte:
Anordnen einer Heizquelle (500, 504, 505, 506, 507) mit einer vertikalen Ausrichtung entlang ihrer Hauptausdehnung oder in einer in Bezug auf die Vertikale angewinkelten Position im Bereich bis maximal 180°;
Bereitstellen eines bestrahlbaren Testobjektes (100) mit einer Längsachse (108) und/oder mindestens einer Mittelachse, wobei eine der Heizquelle (500, 504, 505, 506, 507) zugewandte Testobjektoberfläche (106) einen vorbestimmten Emissionsgrad aufweist und in einem vorbestimmten Abstand (D) zur Heizquelle (500, 504, 505, 506, 507) angeordnet wird;
Befestigen von wenigstens einem Temperatursensor (110) zum Erfassen wenigstens einer Oberflächentemperatur (T101, T102, T103) auf der der Heizquelle (500, 504, 505, 506, 507) zugewandten Testobjektoberfläche (106); und/oder
Bereitstellen eines zum Testobjekt (100) beabstandeten Temperatursensors (201) oder weiteren Temperatursensors (202) zur Messung einer Lufttemperatur (T221, T222, T223) und/oder wenigstens einer Strahlungstemperatur,
Emittieren von Strahlung im Infrarotbereich zum Erreichen eines vorbestimmten Regeltemperaturbereiches einer vorbestimmten Oberfläche (515) der Heizquelle (500, 504, 505, 506, 507);
Erfassen der Heizquellentemperaturverteilung der vorbestimmten Oberfläche (515) der Heizquelle mittels des beabstandeten Temperatursensors (201) oder des weiteren Temperatursensors (202);
Analyse der erfassten Messdaten, um dem vorbestimmten Regeltemperaturbereich der vorbestimmten Oberfläche (515) der Heizquelle (500, 505, 506, 507) und die Lufttemperatur (T221, T222, T223) der erfassten Oberflächentemperatur (T101, T102, T103) der Testobjektoberfläche (106) und/oder der wenigstens einen Strahlungstemperatur zuzuordnen,
wobei der vorbestimmte Regeltemperaturbereich vorzugsweise einem Mittel- oder Medianwert der vorbestimmten Oberfläche (515) der Heizquelle (500, 504, 505, 506, 507) entspricht.

2. Messverfahren nach Anspruch 1, wobei der wenigstens eine Temperatursensor (110), der ausgelegt ist, Temperaturen des Testobjektes (100) zu messen, ausgewählt ist aus der Gruppe umfassend:
Messspitzen zur Temperaturmessung;
Thermodraht;
Präzisionswiderstandsfühler;
PT 100 und/oder PT1000;
ein optischer Pyrometer oder eine Wärmebildkamera;
und/oder einer Kombination von diesen; und/oder
wobei vorzugsweise der vom Testobjekt (100) beabstandete Temperatursensor (201) und/oder weitere Temperatursensor (202), der ausgelegt ist die Temperaturverteilung auf der Heizquelle (500, 504, 505, 506, 507) zu erfassen, ein optischer Pyrometer oder eine Wärmebildkamera ist.

3. Messverfahren nach dem Anspruch 1 oder 2,
wobei das Testobjekt (100) eine vorbestimmte Wärmekapazität aufweist und der Emissionsgrad des Testobjektes (100) wenigstens 70% beträgt, vorzugsweise 95 %, und; wobei das Testobjekt (100) plattenförmig oder stabförmig ist und eine Dicke zwischen 10 mm und 200 mm aufweist und wobei eine Mittelachse und/oder die Längsachse des Testobjektes (100) zur Heizquellenoberfläche parallel ausgerichtet ist,
wobei das Testobjekt (100) vorzugsweise aus einem Dämmmaterial besteht, das auf der der Heizquelle (500, 504, 505, 506, 507) zugewandten Oberfläche eine Schicht aufweist, die den Emissionsgrad auf wenigstens 70 % steigert.

4. Messverfahren nach einem der vorhergehenden Ansprüche, wobei das Befestigen der Sensoren (110) am Testobjekt (100) mittels einer Klebefolie mit einem Emissionsgrad von wenigstens 30 %, vorzugsweise einem Kreppband (102) mit einem Emissionsgrad von wenigstens 95 %, erfolgt.

5. Messverfahren nach einem der vorhergehenden Ansprüche, wobei mit dem beabstandeten Temperatursensor (201) oder weiteren Temperatursensoren (202) Messungen in einer Bezugsebene, welche in einem vorgebbaren Abstand zur Heizquelle (500, 504, 505, 506, 507) angeordnet ist, durchgeführt werden, um vorzugsweise ein Wärmebild aufzunehmen, wobei diese Messungen in verschiedenen Abständen der Heizquelle (500, 504, 505, 506, 507) wiederholt werden.

6. Messverfahren nach einem der vorhergehenden Ansprüche, wobei die Messungen bei verschiedenen Lufttemperaturen, die zwischen 12°C und 28°C betragen, durchgeführt werden und
wobei vorzugsweise jede Lufttemperatur (T221, T222, T223) einem Temperatursollwert (111, 112, 113) auf einer Bezugsebene zuordenbar ist, wobei der Temperatursollwert (111, 112, 113) einem vorbestimmten Regeltemperaturbereich vorzugsweise einem Mittel- oder Medianwert der vorbestimmten Oberfläche (515) der Heizquelle (500, 504, 505, 506, 507) entspricht.

7. Messverfahren nach einem der vorhergehenden Ansprüche, ferner umfassend Bereitstellen eines Multimeters zum Erfassen der Stromstärke, Spannung und/oder elektrische Leistung der Heizquelle (500, 504, 505, 506, 507); und
Bestimmen der Aufheiz-, Einschalt-, und Ausschaltdauer (301, 302, 303) der Heizquelle (500, 504, 505, 506, 507) für den jeweiligen Regeltemperaturbereich, der ausgewählt ist aus einer Mehrzahl von Temperaturstufen, die vorzugsweise zwischen 50° C und der Maximaltemperatur der Heizquelle (500, 504, 505, 506, 507) liegen,
wobei die Heizquelle eine Temperatur in einem vorgebaren Bereich zwischen +/- 2 K bis +/- 25 K, vorzugsweise +/- 5 K um die Regeltemperatur aufweist, indem intervallweise die Heizquelle (500, 504, 505, 506, 507) mittels eines Relais eingeschalten und ausgeschalten wird, wobei vorzugsweise ein Intervall von weniger als 15 Minuten, vorzugsweise weniger als 3 Minuten Länge gewählt wird.

8. Messverfahren nach einem der vorhergehenden Ansprüche, wobei der vorbestimmte Abstand des Testobjektes (100) und/oder die Winkellage der Heizquelle (500, 504, 505, 506, 507) variiert wird und die jeweilige Oberflächentemperatur (T101, T102, T103) am Testobjekt (100) und/oder Strahlungstemperatur in Abhängigkeit von dem Abstand und dem Regeltemperaturbereich der Heizquelle (500, 504, 505, 506, 507) bestimmt wird.

9. System zur Regelung von wenigstens einer Heizquelle (5, 500, 502, 504, 505, 506, 507) oder mehreren Heizquellen (5, 502, 506, 507), die Strahlung im Infrarotbereich emittiert oder emittieren, um einen Raum (400) zu beheizen, umfassend:
eine Steuervorrichtung (3), die ausgebildet ist, Messdaten von einem Lufttemperatursensor (201) zu empfangen;
eine Speichereinheit zur Speicherung von Datenbankdaten (310), und
wobei die Steuervorrichtung (3) ausgebildet ist, unter Verwendung der Datenbankdaten (310) und Messdaten des Lufttemperatursensors (201) die wenigstens eine Heizquelle (5, 500, 502, 504, 505, 506, 507) ein- oder auszuschalten, um eine vorbestimmte Sollwerttemperatur auf einer Bezugsebene zu regeln;
wobei die Datenbankdaten (310) wenigstens teilweise auf einem Messverfahren gemäß einem der Ansprüche 1-8 basieren und wenigstens folgende Daten umfassen:
Messdaten der Lufttemperatur,
Messdaten der Oberflächentemperaturen der Heizquelle (500, 504, 505, 506, 507) umfassend Regeltemperaturwerte;
Messdaten der Oberflächentemperaturen des Testobjektes (100) umfassend Solltemperaturwerte auf einer Bezugsebene;
berechnete Daten;
Einschalt-, Ausschalt- und Aufheizdauern (301, 302, 303);
modellgestützte Daten; und Kombinationen davon.

10. System nach Anspruch 9,
wobei die vorbestimmte Sollwerttemperatur für eine Bezugsebene in einem gewählten Abstand zur jeweiligen Heizquelle (500, 504, 505, 506, 507) vorzugsweise über gezielte Schaltvorgänge und anhaltenden Ein- und Ausschaltdauern regelbar ist.

11. System nach einem der Ansprüche 9 oder 10,
wobei der Lufttemperatursensor (201) in Höhe der Bezugsebene in einem vorbestimmten Abstand zur jeweiligen Heizquelle (500, 504, 505, 506, 507) angeordnet ist.

12. System nach einem der Ansprüche 9 bis 11,
wobei die Datenbankdaten (310) ferner ausgewählt sind aus der Gruppe umfassend:
durch Interpolationsverfahren bestimmte Schätzwerte umfassend Einschalt-, Ausschalt- oder Aufheizdauern (301, 302, 303) oder Temperaturschätzwerte zwischen Messdaten unterschiedlicher benachbarter Temperaturwerte;
durch Interpolationsverfahren bestimmte Schätzwerte umfassend Verbrauchswerte, um zu bestimmen, wie groß die Leistung der Heizquelle (500, 504, 505, 506, 507) ist;
geschätzte Temperaturen auf einer Bezugsebene, die in Abhängigkeit von dem Abstand der Bezugsebene zur Heizquelle (500, 504, 505, 506, 507) berechnet werden,
geschätzte Temperaturen auf einer Oberfläche von einem Testobjekt (100) oder Dummy, die in Abhängigkeit von dem Abstand zur Heizquelle (500, 504, 505, 506, 507) berechnet werden, wobei das Testobjekt (100) vorzugsweise eine definierte Wärmekapazität und Oberfläche mit vorbestimmten definierten Emissionsgrad aufweist;
durch statistische Analysen von Messdaten der abstrahlenden Oberfläche berechnete Daten umfassend Medianwerte oder arithmetisches Mittel; und/oder
modellgestützt ermittelte Temperaturen auf der abstrahlenden Oberfläche und/oder auf der Bezugsebene unter Verwendung eines prädiktiven Modells.

13. Verfahren zur Auslegung und/oder Regelung von wenigstens einer Infrarotheizquelle unter Verwendung eines Systems nach einem der Ansprüche 9-12, umfassend die Schritte:
Bereitstellen wenigstens einer Heizquelle (5, 500, 502, 504, 505, 506, 507) oder mehreren Heizquellen (5, 500, 502, 504, 505, 506, 507), die Strahlung im Infrarotbereich emittiert oder emittieren um einen Raum (400) zu beheizen, vorzugsweise in einem durch ein Auslegungsmodell bestimmten Anordnungswinkel und bei mehr als einer Heizquelle in einem bestimmten Abstand zueinander umfassend:
Messen einer Lufttemperatur (T221);
Speichern von Datenbankdaten (310) in einer Speichereinheit, und
wobei wenigstens eine Steuervorrichtung (3) bereitgestellt wird, um basierend auf Datenbankdaten (310) und der gemessenen Lufttemperatur (T221) die wenigstens eine Heizquelle (5, 500, 502, 504, 505, 506, 507) ein- oder abzuschalten, um eine vorbestimmte Sollwerttemperatur zu regeln.

14. Verfahren nach Anspruch 13, wobei eine Mehrzahl von Heizquellen (5, 500, 502, 504, 505, 506, 507) und ein Innenraumpositionierungssystem (IPS) zur Detektion der Position eines oder mehrerer Personen bereitgestellt werden,
wobei in Abhängigkeit von einer detektierten Person ein oder mehrere Heizquellen (5, 502, 506, 507) geregelt werden.

15. Verfahren nach dem Anspruch 14, ferner umfassend:
Unterteilung des Raumes (400) in eine Mehrzahl von Zonen,
wobei ein Nutzer eine Sollwerttemperatur der Steuervorrichtung (3) für eine Zone übermitteln kann; und
wenn für zwei oder mehr Nutzer Sollwerttemperaturen für eine Zone eingeben werden, ein arithmetisches Mittel der Sollwerte für die jeweilige Zone gebildet wird.
